(19) Europäisches Patentamt
European Patent Office
Office européen des brevets

(11) **EP 4 167 130 A1**

(12) **EUROPEAN PATENT APPLICATION**
published in accordance with Art. 153(4) EPC

(43) Date of publication:
**19.04.2023 Bulletin 2023/16**

(51) International Patent Classification (IPC):
**G06K 9/62** (2022.01)

(21) Application number: **21843243.3**

(22) Date of filing: **08.07.2021**

(86) International application number:
**PCT/CN2021/105215**

(87) International publication number:
**WO 2022/012407 (20.01.2022 Gazette 2022/03)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **15.07.2020 CN 202010680648**

(71) Applicant: **Huawei Technologies Co., Ltd.
Longgang District,
Shenzhen,
Guangdong 518129 (CN)**

(72) Inventors:
• **YE, Hanjia
Nanjing, Jiangsu 210023 (CN)**
• **HONG, Lanqing
Shenzhen, Guangdong 518129 (CN)**
• **YANG, Kuo
Shenzhen, Guangdong 518129 (CN)**

(74) Representative: **Goddar, Heinz J.
Boehmert & Boehmert
Anwaltspartnerschaft mbB
Pettenkoferstrasse 22
80336 München (DE)**

(54) **NEURAL NETWORK TRAINING METHOD AND RELATED DEVICE**

(57) Embodiments of this application relate to a meta-learning technology in the field of artificial intelligence, and disclose a method for training a neural network and a related device. The method includes: inputting a first sample subset into a first neural network, to generate first feature information and a first prediction result of a first query sample; generating a second prediction result of the first query sample based on second feature information corresponding to M groups of support samples included in a sample set, first labeling results corresponding to the M groups of support samples, and the first feature information, and training the first neural network. A first loss function indicates a similarity between the first prediction result and a second labeling result, and a second loss function indicates a similarity between the first prediction result and the second prediction result, or indicates a similarity between the second prediction result and the second labeling result. By simultaneously learning differences in a feature dimension between different samples in a same few-shot task, and differences in the feature dimension between a plurality of categories of samples corresponding to a plurality of few-shot tasks, precision of a prediction result is improved.

FIG. 3

The flowchart (FIG. 3) contains the following steps:

301: A training device creates a feature information base

302: The training device obtains a first sample subset from a sample set, where the first sample subset includes a first support sample and a first query sample

303: The training device inputs the first sample subset into a first neural network, to obtain first feature information of the first query sample and feature information of the first support sample that are generated by the first neural network, and obtain a first prediction result that corresponds to the first query sample and that is output by the first neural network, where the first neural network is used to classify samples

304: The training device adds the feature information of the first support sample to a first queue in the feature information base

305: The training device obtains second feature information corresponding to M groups of support samples and first labeling results corresponding to the M groups of support samples based on the feature information base

306: The training device generates a second prediction result corresponding to the first query sample based on the second feature information corresponding to the M groups of support samples, the first labeling results corresponding to the M groups of support samples, and the first feature information of the first query sample

307: The training device performs iterative training on the first neural network based on a first loss function and a second loss function, until a preset condition is met, where the first loss function indicates a similarity between the first prediction result and a second labeling result, the second loss function indicates a similarity between the first prediction result and the second prediction result, or, the second loss function indicates a similarity between the second prediction result and the second labeling result

## Description

This application claims priority to Chinese Patent Application No. 202010680648.3, filed with the China National Intellectual Property Administration on July 15, 2020 and entitled "METHOD FOR TRAINING NEURAL NETWORK AND RELATED DEVICE", which is incorporated herein by reference in its entirety.

## TECHNICAL FIELD

This application relates to the artificial intelligence field, and in particular, to a method for training a neural network and a related device.

## BACKGROUND

Artificial intelligence (AI) is to simulate, extend, and expand human intelligence by using a computer or a computer controlled machine. Artificial intelligence includes studying design principles and implementation methods of various intelligent machines, so that the machines have perceiving, reasoning, and decision-making functions. At present, performing few-shot learning on neural networks based on deep learning is a feasible research direction of artificial intelligence.

Meta-learning is an important branch of research on few-shot learning. The main idea of meta-learning is that when there are a relatively small quantity of training samples of a target task, a neural network is trained by using a large quantity of few-shot tasks similar to a target few-shot task, so that the trained neural network has a good initial value on the target task. Then, the trained neural network is adjusted by using a small quantity of training samples of the target few-shot task.

However, precision of a prediction result output by the finally obtained neural network is still relatively low. Therefore, a training scheme that can improve precision of the prediction result output by the neural network on the premise of performing training in a meta-learning manner urgently needs to be provided.

## SUMMARY

Embodiments of this application provide a method for training a neural network and a related device. In a process of training a few-shot task, not only a feature of a support sample in one few-shot task is learned, but also features of M groups of support samples are learned. To be specific, during few-shot learning, the neural network not only can learn a relative relationship in one few-shot task, but also can learn an absolute relationship between a plurality of few-shot tasks, to improve precision of an output prediction result.

To resolve the foregoing technical problem, embodiments of this application provide the following technical solutions.

According to a first aspect, an embodiment of this application provides a method for training a neural network, and the method may be applied to the field of meta-learning of the field of artificial intelligence. The method includes: A training device obtains a first sample subset from a sample set, where the sample set includes M groups of support samples and M groups of query samples, and the first sample subset includes a first support sample and a first query sample; and the training device further obtains a labeling result of each first support sample. The training device inputs the first sample subset and the labeling result of each first support sample into a first neural network, where the first neural network generates first feature information of the first query sample, and the training device obtains a first prediction result that corresponds to the first query sample and that is output by the first neural network, where the first prediction result is generated based on a similarity between feature information of the first support sample and the first feature information, and the labeling result of each first support sample. The training device generates a second prediction result corresponding to the first query sample based on M pieces of second feature information corresponding to the M groups of support samples, M first labeling results corresponding to the M groups of support samples, and the first feature information of the first query sample. Each of the M pieces of second feature information indicates features of one of the M groups of support samples, and each of the M first labeling results indicates a correct result corresponding to one of the M groups of support samples. The training device performs iterative training on the first neural network based on a first loss function and a second loss function, until a preset condition is met. The first loss function indicates a similarity between the first prediction result and a second labeling result, the second loss function indicates a similarity between the first prediction result and the second prediction result, or, the second loss function indicates a similarity between the second prediction result and the second labeling result, and the second labeling result is a correct result of the first query sample. The first loss function and the second loss function may both be cross entropy loss functions or relative entropy loss functions.

In this implementation, because the finally obtained neural network overlearns differences in a feature dimension between different samples in a same few-shot task, and ignores differences in the feature dimension between a plurality of different categories of samples corresponding to a plurality of different few-shot tasks, precision of the prediction result output by the neural network is relatively low. To resolve the foregoing problem, at a training stage of this solution, in each few-shot task, the second prediction result corresponding to the first query sample is further generated based on the second feature information corresponding to the M groups of support samples, the first labeling results corresponding to the M groups of support samples, and the feature information of the first query sample, and the second loss function is added to indicate the similarity between the first prediction result and the second prediction result, or indicate the similarity between the second prediction result and the correct result. In this way, in the process of training a few-shot task, the neural network not only can learn a feature of a support sample in a few-shot task, but also can learn features of the M groups of support samples. To be specific, during few-shot learning, the neural network not only can learn the difference in the feature dimension between different samples in one few-shot task, but also can learn the difference in the feature dimension between a plurality of different categories of samples corresponding to the plurality of different few-shot tasks, to improve precision of the output prediction result.

In a possible implementation of the first aspect, after the training device inputs the first sample subset into the first neural network, the method further includes: The training device generates the feature information of the first support sample by using the first neural network, where the first support sample is selected from a first group, and the first group is one of the M groups; and adds the feature information of the first support sample to a first queue of a feature information base. The feature information base includes M queues in one-to-one correspondence with the M groups of support samples, the first queue is a queue corresponding to the first group in the M queues, and is configured to store feature information corresponding to the first group of support samples; and the first queue is further configured to store the labeling result corresponding to the first group of support samples. Before the training device generates the second prediction result corresponding to the first query sample based on the second feature information corresponding to the M groups of support samples, the first labeling results corresponding to the M groups of support samples, and the first feature information, the method further includes: The training device obtains the M pieces of second feature information corresponding to the M groups of support samples and the M first labeling results corresponding to the M groups of support samples based on the feature information base.

In this implementation, the training device generates features of each of the M groups of support samples by using feature information generated in each training process, so that efficiency of the training process is improved.

In a possible implementation of the first aspect, a second queue is any queue in the M queues, and the second queue includes feature information of at least one support sample. That the training device obtains the second feature information corresponding to the M groups of support samples based on the feature information base includes: The training device averages the feature information of all the support samples included in the second queue, to obtain one piece of second feature information corresponding to the second queue. In this implementation, the feature information of all the support samples included in the second queue is averaged, to obtain one piece of second feature information corresponding to the second queue. Operation is simple, and is easy to implement.

In a possible implementation of the first aspect, when the first neural network is a neural network used for regression, the method further includes: The training device adds the labeling result of each first support sample to a first queue of a feature information base. The feature information base includes M queues in one-to-one correspondence with the M groups of support samples, and the first queue is a queue corresponding to the first group in the M queues, and is configured to store feature information corresponding to the first group of support samples. That the training device obtains the second feature information corresponding to the M groups of support samples based on the feature information base includes: The training device averages the feature information of all the support samples included in the second queue, to obtain one piece of second feature information corresponding to the second queue. That the training device obtains the first labeling results corresponding to the M groups of support samples based on the feature information base includes: The training device averages labeling results of all the support samples included in the second queue, to obtain a first labeling result corresponding to the second queue, where the second queue is any queue in the M queues.

In a possible implementation of the first aspect, the training device may preset a length threshold of the second queue to a first threshold. To be specific, the second queue can only store feature information of a maximum of support samples whose quantity is equal to the first threshold.

In a possible implementation of the first aspect, the second queue uses a first in first out queue structure.

In a possible implementation of the first aspect, that the training device generates the second prediction result corresponding to the first query sample based on the second feature information corresponding to the M groups of support samples, the first labeling results corresponding to the M groups of support samples, and the first feature information includes: The training device performs a similarity calculation operation based on the second feature information and the first feature information, to obtain first similarity information, where the first similarity information indicates a similarity between the first feature information of a first query sample and the M pieces of second feature information and a similarity between the first query sample and each of the M groups of support samples. The training device generates the second prediction result based on the first similarity information and the M first labeling results.

In this implementation, the second prediction result is generated in a manner of calculating the similarity by using the features of each of the M groups of support samples and the M first labeling results corresponding to the M groups of support samples. Operation is simple, and is easy to implement.

In a possible implementation of the first aspect, when the first neural network is a neural network that classifies samples, the first sample subset includes N categories of first support samples, and the first prediction result indicates a predicted category of the first query sample in the N categories. That the training device generates the second prediction result corresponding to the first query sample based on the second feature information corresponding to the M groups of support samples, the first labeling results corresponding to the M groups of support samples, and the feature information of the first query sample includes: The training device generates a first classification category based on the second feature information corresponding to the M groups of support samples, the first labeling results corresponding to the M groups of support samples, and the feature information of the first query sample. The first classification category indicates a predicted category of the first query sample in M categories. M elements included in one first classification category are used to indicate probabilities that one first query sample belongs to the M categories. The training device obtains the second prediction result from the first classification category, where the second prediction result indicates the predicted category of the first query sample in the N categories. The second prediction result may be represented as selecting N elements from the foregoing M elements. The selected N elements are used to indicate probabilities that one first query sample belongs to the N categories.

In this implementation, the training device first generates the probabilities that the first query sample belongs to the M categories based on the second feature information corresponding to the M groups of support samples, the first labeling results corresponding to the M groups of support samples, and the feature information of the first query sample, and then determines the probabilities that the first query sample belongs to the N categories based on the probabilities that the first query sample belongs to the M categories, to ensure that in a few-shot task, the training device learns features of each of the M categories when classifying one first query sample, thereby improving precision of the output result of the trained first neural network.

In a possible implementation of the first aspect, when the first neural network is a neural network used for regression, that the training device generates the second prediction result based on the first similarity information and the M first labeling results includes: The training device generates a weight of each of the M first labeling results based on the first similarity information, and performs weighted summation based on the weight of each of the M first labeling results and the M first labeling results, to generate the second prediction result.

In a possible implementation of the first aspect, the first neural network is a neural network that performs regression on samples. In this implementation, the trained first neural network not only can be used to classify samples, but also can be used to perform regression on the samples, so that application scenario s of this solution are expanded.

In a possible implementation of the first aspect, a grouping basis of the M groups is one or more of the following: users, locations, or time corresponding to the support samples. In this implementation, a plurality of grouping bases of the M groups of support samples are provided in the application scenario of regression, so that implementation flexibility of this solution is improved.

In a possible implementation of the first aspect, at least one first support sample included in the first sample subset comes from a same group of the M groups, and at least one first query sample included in the first sample subset comes from a same group of the M groups.

In a possible implementation of the first aspect, the first neural network is any one of the following neural networks: a fully-connected neural network, a convolutional neural network, or a residual neural network. In this implementation, the first neural network may be a fully-connected neural network, a convolutional neural network, or a residual neural network, so that implementation flexibility of this solution is improved.

According to a second aspect, an embodiment of this application further provides a sample processing method, and the method may be applied to the field of meta-learning of the field of artificial intelligence. The method includes: An execution device obtains a third support sample and a third query sample; and the execution device inputs the third support sample and the third query sample into a first neural network, to obtain a third prediction result that corresponds to the third query sample and that is output by the first neural network, where the third prediction result is generated based on a similarity between feature information of the third support sample and feature information of the third query sample. The first neural network is obtained through training based on a first loss function and a second loss function, the first loss function indicates a similarity between the prediction result output by the first neural network and a correct result, the second loss function indicates a similarity between the prediction result output by the first neural network and a second prediction result corresponding to the third query sample, or, the second loss function indicates a similarity between the second prediction result and the correct result, where the second prediction result is obtained based on second feature information corresponding to M groups of support samples, correct results corresponding to the M groups of support samples, and the feature information of the third query sample, the third support sample can belong to a third group of support samples, the third query sample can belong to a third group of query samples, and the third group is one of the M groups.

For specific implementations of steps in the second aspect and the possible implementations of the second aspect of embodiments of this application, specific meanings of nouns in each possible implementation, and beneficial effects brought by each possible implementation, refer to descriptions in the possible implementations of the first aspect. Details are not described herein again.

According to a third aspect, an embodiment of this application provides an apparatus for training a neural network, and the apparatus may be applied to the field of meta-learning of the field of artificial intelligence. The apparatus for training a neural network includes an obtaining module, an input module, a generation module, and a training module. The obtaining module is configured to obtain a first sample subset from a sample set, where the sample set includes M groups of support samples and M groups of query samples, and the first sample subset includes a first support sample and a first query sample; the input module is configured to: input the first sample subset into a first neural network, where the first neural network generates first feature information of the first query sample, and obtain a first prediction result that corresponds to the first query sample and that is output by the first neural network, where the first prediction result is generated based on a similarity between feature information of the first support sample and the first feature information; the generation module is configured to generate a second prediction result corresponding to the first query sample based on second feature information corresponding to the M groups of support samples, first labeling results corresponding to the M groups of support samples, and the first feature information of the first query sample, where each of the first labeling results indicates a correct result corresponding to one of the M groups of support samples; and the training module is configured to perform iterative training on the first neural network based on a first loss function and a second loss function, until a preset condition is met. The first loss function indicates a similarity between the first prediction result and a second labeling result, the second loss function indicates a similarity between the first prediction result and the second prediction result, or, the second loss function indicates a similarity between the second prediction result and the second labeling result, and the second labeling result is a correct result of the first query sample.

In the third aspect of embodiments of this application, the apparatus for training a neural network may be further configured to implement steps performed by the training device in the possible implementations of the first aspect. For specific implementations of some steps in the third aspect and the possible implementations of the third aspect of embodiments of this application, and beneficial effects brought by each possible implementation, refer to descriptions in the possible implementations of the first aspect. Details are not described herein again.

According to a fourth aspect, an embodiment of this application provides a sample processing apparatus, and the apparatus may be applied to the field of meta-learning of the field of artificial intelligence. The sample processing apparatus includes an obtaining module and an input module. The obtaining module is configured to obtain a third support sample and a third query sample; and the input module is configured to input the third support sample and the third query sample into a first neural network, to obtain a third prediction result that corresponds to the third query sample and that is output by the first neural network, where the third prediction result is generated based on a similarity between feature information of the third support sample and feature information of the third query sample. The first neural network is obtained through training based on a first loss function and a second loss function, the first loss function indicates a similarity between the prediction result output by the first neural network and a correct result, the second loss function indicates a similarity between the prediction result output by the first neural network and a second prediction result corresponding to the third query sample, or, the second loss function indicates a similarity between the second prediction result and the correct result, where the second prediction result is obtained based on second feature information corresponding to M groups of support samples, correct results corresponding to the M groups of support samples, and the feature information of the third query sample, the third support sample can belong to a third group of support samples, the third query sample can belong to a third group of query samples, and the third group is one of the M groups.

In the fourth aspect of embodiments of this application, the apparatus for training a neural network may be further configured to implement steps performed by the execution device in the possible implementations of the second aspect. For specific implementations of some steps in the fourth aspect and the possible implementations of the fourth aspect of embodiments of this application, and beneficial effects brought by each possible implementation, refer to descriptions in the possible implementations in the second aspect. Details are not described herein again.

According to a fifth aspect, an embodiment of this application provides a training device. The training device may include a processor, the processor is coupled to a memory, and the memory stores program instructions. When the program instructions stored in the memory are executed by the processor, the method for training a neural network according to the first aspect is implemented. For the steps performed by the training device during execution of the possible implementations of the first aspect by the processor, refer to the first aspect for details. Details are not described herein again.

According to a sixth aspect, an embodiment of this application provides an execution device. The execution device may include a processor, the processor is coupled to a memory, and the memory stores program instructions. When the program instructions stored in the memory are executed by the processor, the sample processing method according to the second aspect is implemented. For the steps performed by the execution device during execution of the possible implementations of the second aspect by the processor, refer to the second aspect for details. Details are not described herein again.

According to a seventh aspect, an embodiment of this application provides a computer-readable storage medium, and the computer-readable storage medium stores a computer program. When the computer program is run on a computer, the computer is enabled to perform the method for training a neural network according to the first aspect; or the computer is enabled to perform the sample processing method according to the second aspect.

According to an eighth aspect, an embodiment of this application provides a circuit system. The circuit system includes a processing circuit, and the processing circuit is configured to perform the method for training a neural network according to the first aspect, or the processing circuit is configured to perform the sample processing method according to the second aspect.

According to a ninth aspect, an embodiment of this application provides a computer program. When the computer program is run on a computer, the computer is enabled to perform the method for training a neural network according to the first aspect, or the computer is enabled to perform the sample processing method according to the second aspect.

According to a tenth aspect, an embodiment of this application provides a chip system. The chip system includes a processor, configured to support a training device or an execution device in implementing functions in the foregoing aspects, for example, sending or processing data and/or information in the foregoing methods. In a possible design, the chip system further includes a memory. The memory is configured to store program instructions and data that are necessary for a server or a communications device. The chip system may include a chip, or include a chip and another discrete device.

## BRIEF DESCRIPTION OF DRAWINGS

FIG. 1 is a schematic diagram of a structure of an artificial intelligence main framework according to an embodiment of this application;

FIG. 2 is a diagram of a system architecture of a sample processing system according to an embodiment of this application;

FIG. 3 is a schematic flowchart of a method for training a neural network according to an embodiment of this application;

FIG. 4 is a schematic diagram of a first sample subset in a method for training a neural network according to an embodiment of this application;

FIG. 5 is another schematic diagram of a first sample subset in a method for training a neural network according to an embodiment of this application;

FIG. 6 is a schematic flowchart of generating a first prediction result in a method for training a neural network according to an embodiment of this application;

FIG. 7 is a schematic diagram of a feature information base in a method for training a neural network according to an embodiment of this application;

FIG. 8 is another schematic flowchart of a method for training a neural network according to an embodiment of this application;

FIG. 9 is still another schematic flowchart of a method for training a neural network according to an embodiment of this application;

FIG. 10 is a schematic flowchart of a sample processing method according to an embodiment of this application;

FIG. 11 is a schematic diagram of a structure of an apparatus for training a neural network according to an embodiment of this application;

FIG. 12 is another schematic diagram of a structure of an apparatus for training a neural network according to an embodiment of this application;

FIG. 13 is a schematic diagram of a structure of a sample processing apparatus according to this application;

FIG. 14 is a schematic diagram of a structure of a training device according to an embodiment of this application;

FIG. 15 is a schematic diagram of a structure of an execution device according to an embodiment of this application; and

FIG. 16 is a schematic diagram of a structure of a chip according to an embodiment of this application.

## DESCRIPTION OF EMBODIMENTS

Embodiments of this application provide a method for training a neural network and a related device. In a process of training a few-shot task, not only a feature of a support sample in one few-shot task is learned, but also features of M groups of support samples are learned. To be specific, during few-shot learning, the neural network not only can learn a relative relationship in one few-shot task, but also can learn an absolute relationship between a plurality of few-shot tasks, to improve precision of an output prediction result.

In the specification, claims, and accompanying drawings of this application, terms such as "first" and "second" are intended to distinguish between similar objects, but do not necessarily indicate a specific order or sequence. It should be understood that the terms used in such a way are interchangeable in proper circumstances. This is merely a distinguishing manner that is used when objects having a same attribute are described in embodiments of this application. In addition, the terms "include", "have", and any other variants thereof are intended to cover the non-exclusive inclusion, so that a process, method, system, product, or device that includes a series of units is not necessarily limited to those units, but may include other units not expressly listed or inherent to such a process, method, system, product, or device.

The following describes embodiments of this application with reference to accompanying drawings. A person of ordinary skill in the art may know that, with development of technologies and emergence of a new scenario, the technical solutions provided in embodiments of this application are also applicable to a similar technical problem.

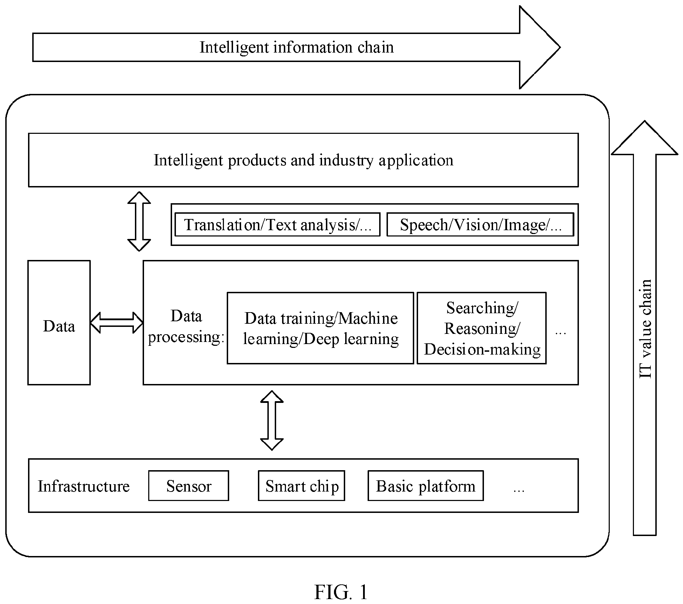

An overall working procedure of an artificial intelligence system is first described. FIG. 1 shows a schematic diagram of a structure of an artificial intelligence main framework. The following describes the artificial intelligence main framework from two dimensions: an "intelligent information chain" (horizontal axis) and an "IT value chain" (vertical axis). The "intelligent information chain" reflects a series of processes from obtaining data to processing the data. For example, the process may be a general process of intelligent information perception, intelligent information representation and formation, intelligent reasoning, intelligent decision-making, and intelligent execution and output. In these processes, the data undergoes a refinement process of "data-information-knowledge-intelligence". The "IT value chain" reflects a value brought by artificial intelligence to the information technology industry from an underlying infrastructure and information (technology providing and processing implementation) of human intelligence to an industrial ecological process of a system.

(1) Infrastructure

The infrastructure provides computing capability support for the artificial intelligence system, communicates with an external world, and implements supporting by using a basic platform. The infrastructure communicates with outside by using a sensor. A computing capability is provided by a smart chip. For example, the smart chip includes a hardware acceleration chip such as a central processing unit (CPU), a neural-network processing unit (NPU), a graphics processing unit (GPU), an application-specific integrated circuit (ASIC), or a field programmable gate array (FPGA). The basic platform includes related platform assurance and support such as a distributed computing framework and a network, and may include cloud storage and computing, and interconnected networks. For example, the sensor communicates with the outside to obtain data, and the data is provided, for computation, to a smart chip in a distributed computing system provided by the basic platform.

(2) Data

Data from a higher layer of the infrastructure indicates a data source in the artificial intelligence field. The data relates to a graph, an image, speech, and text, further relates to internet of things data of a conventional device, and includes service data of an existing system and perception data such as force, displacement, a liquid level, a temperature, and humidity.

(3) Data processing

Data processing usually includes manners such as data training, machine learning, deep learning, searching, reasoning, and decision-making.
Machine learning and deep learning may mean performing symbolic and formalized intelligent information modeling, extraction, preprocessing, training, and the like on data.
Reasoning is a process in which a human intelligent reasoning manner is simulated in a computer or an intelligent system, and machine thinking and problem resolving are performed by using formal information according to a reasoning control policy. A typical function is searching and matching.
Decision-making is a process in which a decision is made after intelligent information reasoning, and usually provides functions such as classification, ranking, and prediction.

(4) General capabilities

After the foregoing data processing is performed on data, some general capabilities may be further formed based on a result of the data processing. For example, the this application may be an algorithm or developed as a general system. For example, the this application may be applied to application scenarios such as image classification, image personalized management, battery charging personalized management, text analysis, computer vision processing, and speech recognition.

(5) Intelligent products and industry application

Intelligent products and industry applications are products and applications of the artificial intelligence system in various fields, and are encapsulation for an overall solution of artificial intelligence, to productize intelligent information decision-making and implement applications. Application fields thereof mainly include an intelligent terminal, intelligent manufacturing, intelligent transportation, intelligent home, intelligent healthcare, intelligent security protection, autonomous driving, a safe city, and the like.

Embodiments of this application are mainly applied to an application scenario in which a neural network is trained by using a meta-learning technology, and the trained neural network may be applied to the foregoing application fields to implement classification, regression, or another function. A processing object of the trained neural network may be an image sample, a discrete data sample, a text sample, a speech sample, or the like. For example, in an image classification scenario, because there are many categories of to-be-classified objects, a training device generally cannot ensure that there is a large quantity of training samples for each category of object. In this case, the meta-learning technology may be used to train a learning to learn capability of a neural network, that is, train a capability of the neural network of learning to learn a new category of image. For another example, in an image personalized management scenario, when taking photos for a user, an intelligent terminal may continuously take a plurality of images, and select an image that most conforms to aesthetics of the user from the plurality of images, and display the image to the user. Because different users have different aesthetics, and the training device generally cannot collect a large quantity of training samples of each user, the neural network may be trained by using the meta-learning technology, to train a capability of the neural network of learning to learn the aesthetics of a new user for an image. For another example, in a battery charging personalized management scenario, charging duration may be obtained through regression based on discrete data of a mobile phone model, a battery model, a charging location, a charging moment, or other data of a user, and regression logics between discrete data of different users and the charging duration may be different. Generally, the training device cannot collect a large quantity of training samples of each user, and the meta-learning technology may be used to train the neural network, so as to train a capability of the neural network of learning to learn a logical relationship between discrete data of a new user and the charging duration. In addition, embodiments of this application may be further applied to a speech wake-up personalized management scenario, an under-display fingerprint personalized management scenario, and the like. It should be understood that the examples herein are merely for ease of understanding the application scenarios of embodiments of this application, and no exhaustive description of the application scenarios of embodiments of this application is provided.

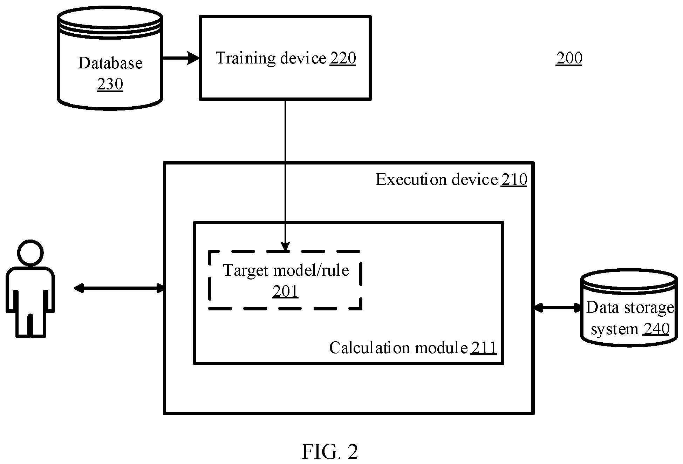

Based on the foregoing scenarios, an embodiment of this application provides a method for training a neural network. For ease of understanding this solution, a system architecture of a sample processing system in which the method for training a neural network provided in this embodiment of this application is performed is first described with reference to FIG. 2. FIG. 2 is a diagram of a system architecture of a sample processing system according to an embodiment of this application. In FIG. 2, the sample processing system 200 includes an execution device 210, a training device 220, a database 230, and a data storage system 240, and the execution device 210 includes a calculation module 211.

At a training stage, the database 230 is configured to store a sample set used for training. The sample set may be divided into a support sample set (support set) and a query sample set (query set). The support sample set includes M groups of support samples and a labeling result of each support sample. The query sample set includes M groups of query samples and a labeling result of each query sample, and a value of M is an integer greater than or equal to 1. The training device 220 generates a target model/rule 201 used to process samples, and performs iterative training on the target model/rule 201 by using the sample set in the database, to obtain a mature target model/rule 201. The target model/rule 201 is specifically represented as a neural network. The neural network obtained by the training device 220 may be applied to different systems or devices.

At a reasoning stage, the execution device 210 may invoke data, code, and the like in the data storage system 240, or may store data, instructions, and the like into the data storage system 240. The data storage system 240 may be disposed in the execution device 210, or may be an external memory relative to the execution device 210. The calculation module 211 may process, by using the neural network, samples obtained by the execution device 210, to obtain a prediction result, and a specific expression form of the prediction result is related to a function of the neural network.

In some embodiments of this application, for example, in FIG. 2, a "user" may directly interact with the execution device 210, that is, the execution device 210 and a client device are integrated in a same device. However, FIG. 2 is merely a schematic diagram of an architecture of two sample processing systems according to an embodiment of the this application, and location relationships between devices, components, modules, and the like shown in the figure constitute no limitation. In some other embodiments of this application, the execution device 210 and the client device may be independent devices, the execution device 210 is configured with an input/output interface, and performs data exchange with the client device, and the "user" may input collected samples to the input/output interface by using the client device. The execution device 210 returns a prediction result to the client device by using the input/output interface.

With reference to the foregoing description, an embodiment of this application provides a method for training a neural network. At a training stage of the neural network, in a process of executing each few-shot task, the neural network is trained in a conventional manner. In addition, a second prediction result corresponding to a first query sample is generated based on second feature information corresponding to M groups of support samples, first labeling results corresponding to the M groups of support samples, and first feature information of the first query sample. Each of the first labeling results indicates a correct result corresponding to one of the M groups of support samples. In addition, a second loss function is added. A training objective of the second loss function is to increase a similarity between a first prediction result and the second prediction result, or, the training objective of the second loss function is to increase a similarity between the second prediction result and a second labeling result. In this way, in a training process corresponding to one few-shot task, not only a feature of a support sample in one few-shot task can be learned, but also features of the M groups of support samples can be learned. To be specific, during few-shot learning, the neural network not only can learn a relative relationship in one few-shot task, but also can learn an absolute relationship between a plurality of few-shot tasks, to improve precision of an output prediction result. Because the method has impact on both the training stage and the reasoning stage, and implementation processes of the training stage and the reasoning stage are different, specific implementation processes of the foregoing two stages are separately described below.

I. Training stage

In this embodiment of this application, the training stage is a process in which the training device 220 in FIG. 2 performs a training operation on the target model/rule 201. Because the neural network obtained through training in this embodiment of this application may be used for classification, regression, or another function, and training steps are different when the neural network is used for classification and when the neural network is used for regression, the following separately describes training processes of the two functions.

(1) The trained neural network is used for classification.

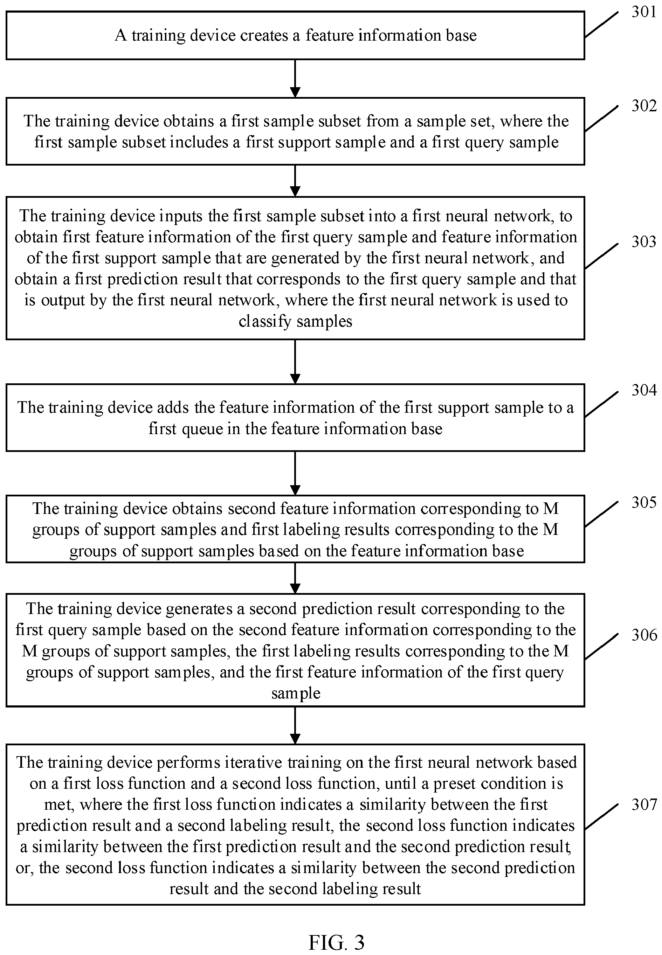

In this embodiment of this application, that the trained neural network is used for classification means that a prediction result output by the neural network is output based on a classification network. For example, speech recognition, speech translation, and the like are all implemented by using the classification network, which is also considered as the trained neural network used for classification. Specifically, refer to FIG. 3. FIG. 3 is a schematic flowchart of a method for training a neural network according to an embodiment of this application. The method may include the following steps: 301: A training device creates a feature information base.

In this embodiment of this application, before training the neural network, the training device creates the feature information base. The feature information base is also referred to as a meta-repository, and the feature information base includes M queues in one-to-one correspondence with the M groups of support samples. In this embodiment, different groups of support samples in the M groups of support samples have different categories, that is, the M groups of support samples include a total of M categories of support samples. Each of the M queues is configured to store feature information corresponding to one group of support samples and a labeling result corresponding to one group of support samples.

Because a function of the neural network in this embodiment is to perform classification, a classification basis of different queues in the M queues is the category. For example, if the neural network is used for image classification, different categories may be cats, dogs, dolphins, hippos, and the like. For another example, if the neural network is used to perform image personalized management, different categories may be images liked by a user A, images disliked by the user A, images liked by a user B, images disliked by the user B, and the like. Alternatively, the different categories may be images liked by users of a type A, images disliked by the users of the type A, images liked by users of a type B, images disliked by the users of the type B, and the like. For another example, if the neural network is used to perform personalized speech recognition, a difference between different categories of speech may be that accents are different. It should be understood that, no exhaustive description is provided herein.

Each of the M queues may be stored in a key-value manner. The training device distinguishes different queues by using different "keys". The key may also be referred to as a token, and is used to uniquely identify a queue. Each of the M queues may further include a queue category. Optionally, because different queues have different categories in this embodiment, the category of each queue may be directly used as identification information of the queue (that is, a key of the queue). Further, the category of each queue may take the form of one-hot (one-hot) encoding. "Values" in each queue include feature information of a plurality of support samples. The one-hot encoding used to indicate the category may be specifically represented as a vector including M elements. For example, a value of M is 64, the 64 categories are cats, dogs, lions, strawberries, sofas, ..., tea tables, and apples respectively, and the one-hot encoding is (0, 0, 1, 0, 0, ..., 0, 0), and represents the category lions. Exhaustive description of the 64 categories is not provided herein. Elements that are not unfolded and shown in the one-hot encoding are all 0. It should be understood that, in another implementation, the value of M may be alternatively larger or smaller. The example herein is merely for ease of understanding, and is not used to limit this solution.

Specifically, because the sample set includes a total of M queues, the training device needs to initialize M keys (this may also be referred to as initializing M tokens). Optionally, the training device may set a queue length threshold for each queue at an initialization stage, that is, a quantity of pieces of feature information stored in each queue needs to be less than or equal to a first threshold. A value of the first threshold may be a preset multiple of a sum of a quantity of support samples in each category and a quantity of query samples in each queue in a few-shot task. For example, the preset multiple may be 5, 6, 7, 8, 9, 10, or the like, and the value of the first threshold may be 500, 1000, another value, or the like. This is not limited herein. For a more intuitive understanding of this solution, a queue in the M queues may be represented as follows:

$$Q_c = \{\phi(x_i), y_i = c\} \text{ and } |Q_c| = max\_len; \tag{1}$$

where $Q_c$ represents a queue whose category is c in the M queues, $\phi(x_i), y_i = c$ represents that the queue whose category is c is configured to store feature information of support samples whose labeling category is c, and $|Q_c| = max\_len$ represents that a length threshold of the queue whose category is c is max_len, that is, one queue can store feature information of a maximum of max_len support samples. A value of max_len (that is, the first threshold) is preset, and the category c is any one of the M categories. It should be understood that the example in formula (1) is merely for ease of understanding this solution, and is not used to limit this solution.

Further, optionally, each of the M queues may use a first in first out (first in first out, FIFO) queue structure.

302: The training device obtains a first sample subset from the sample set, where the first sample subset includes a first support sample and a first query sample.

In this embodiment of this application, before executing a few-shot task, the training device obtains the first sample subset from the sample set, where one first sample subset corresponds to one few-shot task. The sample set includes a total of M groups of support samples and M groups of query samples. Samples included in the M groups of support samples and samples included in the M groups of query samples do not overlap each other, to ensure that a support sample and a query sample in a few-shot task do not overlap each other.

One first sample subset includes N categories of first support samples and n first query samples, each of the N categories of first support samples includes at least one first support sample, and a correct category of any query sample is included in the N categories. N is an integer greater than or equal to 1 and less than or equal to M, and n is an integer greater than or equal to 1. For the categories of the M groups of support samples and the M groups of query samples, refer to the description of the categories of the M queues in step 301. Details are not described herein again.

Specifically, in an application scenario, the neural network is used to classify objects in samples, and a value of N is greater than or equal to 2. Then, step 302 may include: The training device randomly selects N categories of first support samples from the M groups of support samples, and randomly selects n first query samples from N categories of query samples included in the M groups of query samples. Any one of the n first query samples belongs to one of the N categories. For example, if the value of N is 5, the support samples and the query samples are specifically images, and categories of N categories of support images are cats, dogs, lions, strawberries, and apples respectively, a category of any query image is one of cats, dogs, lions, strawberries, or apples. For another example, if the value of N is 3, and the support samples and the query samples are specifically speech, categories of N categories of support speech are respectively speech of a mobile phone owner, speech of a user A (non-owner), and speech of a user B (non-owner). It should be understood that, the examples herein are used for ease of understanding this solution, but are not used to limit this solution. It should be understood that the examples herein are merely for ease of understanding this solution.

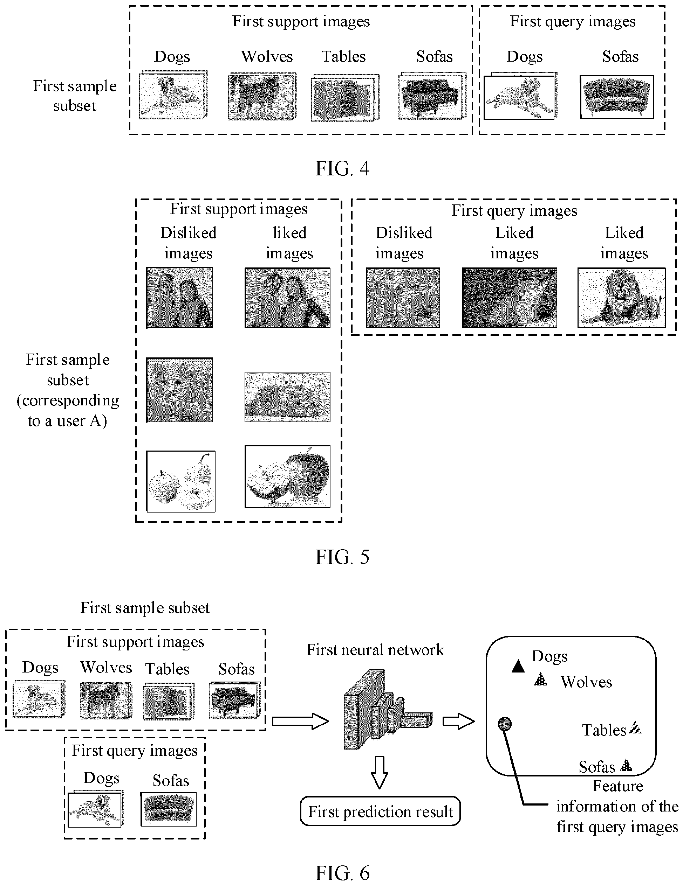

For a more intuitive understanding of a concept of the first sample subset, refer to FIG. 4. FIG. 4 is a schematic diagram of a first sample subset in a method for training a neural network according to an embodiment of this application. In FIG. 4, an example in which both the support samples and the query samples are images is used. As shown in FIG. 4, the first sample subset used to execute a few-shot task includes four categories of first support images and a plurality of first query images. The four categories are respectively dogs, wolves, tables, and sofas. Each category of the first support image includes at least one first support image, the plurality of first query images include images whose correct categories are dogs and sofas, and the category dogs and the category sofas are both in the foregoing four categories. It should be understood that, the example in FIG. 4 is merely a concept for ease of understanding the first sample subset, and is not used to limit this solution.

In another application scenario, the neural network is used to perform personalized management on images, and the value of N is 2. In this case, a classification basis between different categories of samples in the M categories (namely, corresponding to M groups) of support samples and in the M categories of query samples in the sample set is related to a user. In one case, the classification basis of the foregoing M categories is two dimensions: the user and whether the user likes or not. To be specific, one group of samples includes an image liked by the user, or includes an image disliked by the user. Optionally, the training device may obtain a feature of each of a plurality of users based on data of the user in the sample set, and then cluster the plurality of users based on the feature of each user. In this case, one group of samples includes one category of images liked by the user, or includes one category of images disliked by the user.

Step 302 may include: The training device randomly determines one first user from a plurality of users included in M categories of support images, or randomly determines one category of first-category users from a plurality of categories of users included in the M categories of support images. To be specific, two groups of support images: a P$^{th}$ group of support images and a Q$^{th}$ group of support images respectively, are determined from the M groups of support images, and two groups of query images: a P$^{th}$ group of query images and a Q$^{th}$ group of query images respectively, are determined from the M groups of query images. The P$^{th}$ group of support images includes support images liked by the first user (or the first-category users), and the Q$^{th}$ group of support images includes support images disliked by the first user (or the first-category users). The P$^{th}$ group of query images includes query images liked by the first user (or the first-category users), and the Q$^{th}$ group of query images includes query images disliked by the first user (or the first-category users).

The training device randomly selects at least one support image from the P$^{th}$ group of support images, randomly selects at least one support image from the Q$^{th}$ group of support images, and uses the selected support image as the first support image in the first sample subset. The training device randomly selects at least one query image from the P$^{th}$ group of query images, and/or randomly selects at least one query image from the Q$^{th}$ group of query images, and uses the selected query image as the first query image in the first sample subset.

For a more intuitive understanding of the concept of the first sample subset, refer to FIG. 5. FIG. 5 is a schematic diagram of a first sample subset in a method for training a neural network according to an embodiment of this application. In FIG. 5, an example in which both the support samples and the query samples are images is used. All images included in the first sample subset are selected from images of the user A. As shown in FIG. 5, the first sample subset includes two categories of first support images, which are respectively images disliked by the user A and images liked by the user A. The first sample subset includes a plurality of first query images, including images disliked by the user A and images liked by the user A, as shown in FIG. 5. It should be understood that, in an actual situation, only the images liked by the user A or only the images disliked by the user A may be selected as the first query images included in the first sample subset. The example in FIG. 5 is merely for ease of understanding the concept of the first sample subset, and is not used to limit this solution.

Further, the training device further obtains a correct category of each first support sample (namely, a labeling result of each first support sample) and a correct category of each first query sample (namely, a labeling result of each first query sample). In a few-shot task, the support samples are used to guide the neural network in learning features of each of the N categories of first support samples, and the query samples are used to test a classification capability of the neural network.

303: The training device inputs the first sample subset into the first neural network, to obtain first feature information of the first query sample and feature information of the first support sample that are generated by the first neural network, and obtain a first prediction result that corresponds to the first query sample and that is output by the first neural network, where the first neural network is used to classify samples.

In this embodiment of this application, after obtaining the first sample subset used to execute a few-shot task, the training device may input the N categories of first support samples, the labeling result (that is, the correct category) of each first support sample, and the n first query samples into the first neural network, to perform a feature extraction operation on each first support sample and each first query sample by using the first neural network, to obtain the first feature information of the first query sample and the feature information of each first support sample.

The training device separately generates a category center of each of the N categories based on the feature information of each first support sample in the N categories of first support samples by using the first neural network. Specifically, for a second category of the N categories, the second category is any one of the N categories. After generating the feature information of each first support sample by using the first neural network, the training device may obtain, based on the labeling result of each first support sample, feature information of each first support sample belonging to the second category. The training device averages, by using the first neural network, feature information of all first support samples belonging to the second category, to obtain a category center of the second category in the N categories. The training device performs the foregoing operation on each of the N categories by using the first neural network, to obtain a category center of each of the N categories.

After obtaining the category center of each of the N categories, the training device generates the first prediction result corresponding to each first query sample by using the first neural network. The first prediction result is generated based on a similarity between the feature information of the first support sample and the first feature information of the first query sample.

For any first query sample in the at least one first query sample, the training device calculates a distance between the first feature information of one first query sample and the category center of each of the N categories by using the first neural network, that is, calculates a similarity between the first feature information of one first query sample and the category center of each of the N categories, to obtain a second classification category of the first query sample (namely, the first prediction result of the first query sample). The second classification category of the first query sample may also be referred to as a label of the first query sample. A smaller distance between the first feature information of the first query sample and a category center of one of the N categories indicates a higher probability that the first query sample belongs to the category. The training device performs the foregoing operation on each first query sample by using the first neural network, to obtain the second classification category of each first query sample (namely, the first prediction result of each first query sample). The second classification category of the first query sample is used to indicate a predicted category of the first query sample in the N categories.

For example, if the first query sample is an image, and the N categories are respectively dogs, wolves, tables, and sofas, the second classification category of the first query image indicates that the category of the first query image is dogs. For another example, if the first query sample is an image, and the N categories are respectively images liked by the user A and images disliked by the user A, the second classification category of the first query image indicates that the category of the first query image is images liked by the user A.

The first neural network may be specifically a convolutional neural network or a residual neural network. For example, the first neural network may be a four-layer convolutional neural network. For another example, the first neural network may be a residual network (residual network, ResNet) 12, or the like. The first neural network may be alternatively another neural network used for classification, or the like. No exhaustive description is provided herein. The first neural network includes a feature extraction network and a first classification network, and the first classification network may be specifically represented as a classifier. The feature extraction network is configured to generate the feature information of the first support sample and the feature information of the first query sample, and the first classification network is configured to generate category indication information of the first query sample.

For a more intuitive understanding of this solution, refer to FIG. 6. FIG. 6 is a schematic flowchart of generating a first prediction result in a method for training a neural network according to an embodiment of this application. In FIG. 6, an example in which both the support samples and the query samples are images, a value of N is 4, and the four categories are respectively dogs, wolves, tables, and sofas is used. The training device inputs the first sample subset into the first neural network, performs feature extraction on each first support image by using the first neural network, and generates four category centers based on feature information of each first support image. Four triangles represent the four category centers in FIG. 6, and respectively indicate features of all support images whose category is dogs, features of all support images whose category is wolves, features of all support images whose category is tables, and features of all support images whose category is sofas. The training device generates the feature information of each first query image by using the first neural network, and calculates distances between the feature information of one first query image and the four category centers by using the first neural network, to output the first prediction result of the first query sample. The foregoing first prediction result indicates the predicted category of the first query sample in the four categories. It should be understood that the example in FIG. 4 is merely for ease of understanding the concept of the first sample subset, and is not used to limit this solution.

304: The training device adds the feature information of the first support sample to a first queue in the feature information base.

In this embodiment of this application, the training device performs meta repo update (meta repo update) each time after generating the feature information of each first support sample in step 303. For one first support sample, in an implementation, the training device selects, from the M queues based on a group corresponding to the first support sample, the first queue corresponding to the first support sample, and places the feature information of the first support sample into the first queue. Specifically, because the M queues are in one-to-one correspondence with the M groups of support samples, and the first support sample is selected from (chosen from) a first group, the feature information of the first support sample is placed into the first queue corresponding to the first group. The first queue is configured to store feature information corresponding to the first group of support samples.

In another implementation, because each of the M queues includes category information, the training device selects, from the M queues based on the labeling result corresponding to the first support sample (namely, the correct category of the first support sample), the first queue corresponding to the first support sample, and places the feature information of the first support sample into the first queue.

Optionally, because the first queue uses the "first in first out" queue structure, the training device may add the feature information of the first support sample to the tail of the first queue.

Further, optionally, because a length of the first queue may be preset to a first threshold, before adding the feature information of the first support sample to the first queue, the training device may determine whether the length of the first queue reaches the first threshold. If the length of the first queue reaches the first threshold, the feature information that is located at the head of the queue in the first queue is deleted, and the feature information of the first support sample is added to the tail of the first queue.

The training device performs the foregoing operation on each first support sample in the first sample subset, to add the feature information of each first support sample to the first queue of the feature information base. It should be noted that, because one first sample subset includes the N categories of first support samples, the training device separately adds the feature information of all the first support samples in the first sample subset to N different first queues.

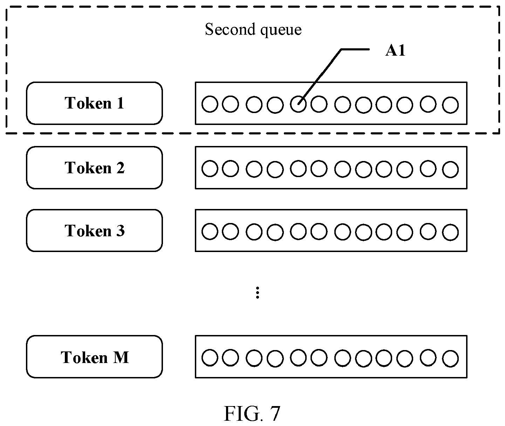

For a more intuitive understanding of this solution, refer to FIG. 7. FIG. 7 is a schematic diagram of a feature information base in a method for training a neural network according to an embodiment of this application. The feature information base includes the M queues. M rows shown in FIG. 7 respectively correspond to the M queues, and a second queue is any queue in the M queues. As shown in FIG. 7, the second queue includes a token and a plurality of A ls, and the token may also be referred to as a key. The plurality of A1s in the second queue are values of the second queue. In an application scenario in which the first neural network is used for classification, any A1 indicates feature information of one support sample. In FIG. 7, an example in which feature information of a maximum of 12 support samples is stored in one queue is used. It should be understood that, in an actual situation, when the feature information base is initialized, values in each queue are null, and values of each queue are continuously supplemented in a process of continuously iteratively updating the first neural network. The example in FIG. 7 is merely for ease of understanding a concept of the feature information base. When the first neural network is applied to a regression scenario, each A1 not only indicates feature information of one support sample, but also indicates a labeling result of one support sample. The example herein is not used to limit this solution.

305: The training device obtains the second feature information corresponding to the M groups of support samples and the first labeling results corresponding to the M groups of support samples based on the feature information base.

In this embodiment of this application, the training device obtains, based on the feature information base, the M pieces of second feature information corresponding to the M groups of support samples and the M first labeling results corresponding to the M groups of support samples. Each of the M first labeling results indicates a correct result (that is, a correct category) corresponding to one of the M groups of support samples.

The feature information base includes the M queues in one-to-one correspondence with the M groups of support samples, and each queue may include feature information of one or more support samples. Each of the M pieces of second feature information is used to reflect feature information of all support samples in one queue. Because one of the M queues corresponds to one category of support samples, one piece of second feature information corresponding to one of the M groups of support samples may also be understood as a category center corresponding to one of the M groups of support samples.

Specifically, for one piece of second feature information corresponding to any group of support samples in the M groups of support samples, the training device obtains, from the M queues included in the feature information base, feature information of all support samples included in the second queue and a category of the second queue, averages the feature information of all the support samples included in the second queue, to obtain one piece of second feature information corresponding to the second queue (that is, one piece of second feature information corresponding to one of the M groups of support samples is obtained), and determines the category of the second queue as a first labeling result corresponding to one of the M groups of support samples. The second queue is any queue in the M queues.

In this embodiment of this application, the feature information of all the support samples included in the second queue is averaged, to obtain one piece of second feature information corresponding to the second queue. Operation is simple, and is easy to implement.

It should be noted that an execution sequence of step 305 is not limited in this embodiment of this application, and step 305 may be performed before or after any one of step 302, step 303, and step 304.

In this embodiment of this application, the feature information base is configured in the training device, the feature information base includes the M queues in one-to-one correspondence with the M groups of support samples, and each of the M queues is configured to store feature information of one group of support samples. In each process of performing training each time, the feature information of each first support sample is generated by using the first neural network, and the feature information of each first support sample that is generated by the first neural network is added to a corresponding queue. The training device can obtain the M pieces of second feature information corresponding to the M groups of support samples based on the feature information base. To be specific, the training device continuously updates the feature information base in each training process. In the foregoing manner, the training device generates the features of each of the M groups of support samples by using the feature information generated in each training process, so that efficiency of the training process is improved.

306: The training device generates a second prediction result corresponding to the first query sample based on the second feature information corresponding to the M groups of support samples, the first labeling results corresponding to the M groups of support samples, and the first feature information of the first query sample.

In this embodiment of this application, for any first query sample in the one or more first query samples included in the first sample subset, after obtaining the M pieces of second feature information corresponding to the M groups of support samples and the M first labeling results corresponding to the M groups of support samples, the training device performs a similarity calculation operation based on the M pieces of second feature information and the first feature information of one first query sample, to obtain first similarity information. The first similarity information indicates a similarity between the first feature information of one first query sample and the M pieces of second feature information, that is, indicates a similarity between the first query sample and each of the M groups of support samples. The training device generates the second prediction result based on the first similarity information and the M first labeling results corresponding to the M groups of support samples.

In this embodiment of this application, the second prediction result of the first query sample is generated by using the similarity between the feature of the first query sample and the feature of each of the M groups of support samples, and the M first labeling results corresponding to the M groups of support samples. In a manner of calculating the similarity, the second prediction result is generated. Operation is simple, and is easy to implement.

Specifically, the training device generates a first classification category based on the first similarity information and the M first labeling results corresponding to the M groups of support samples. The first classification category indicates a predicted category of the first query sample in the M categories. The M pieces of second feature information are in one-to-one correspondence with the M categories. Third feature information is any one of the M pieces of second feature information. A higher similarity between the first feature information and the third feature information indicates a higher probability that the first query sample belongs to a category corresponding to the third feature information.

The training device obtains the second prediction result from the first classification category. The second prediction result indicates the predicted category of the first query sample in the N categories. One first classification category may be represented as a vector including M elements. The M elements included in one first classification category are used to indicate probabilities that one first query sample belongs to the M categories. The second prediction result may be represented as selecting N elements from the foregoing M elements. The selected N elements are used to indicate probabilities that one first query sample belongs to the N categories.

For example, the value of M is 6, the M categories are respectively images liked by a user A, images disliked by the user A, images liked by a user B, images disliked by the user B, images liked by a user C, and images disliked by the user C. The value of N is 2. The N categories are respectively images liked by the user B and images disliked by the user B. The first classification category is specifically represented as (0.05, 0.1, 0.7, 0.01, 0.09, 0.05), indicating the probabilities that one first query image belongs to the M categories. The second prediction result may be (0.7, 0.01), indicating the probabilities that one first query image belongs to the N categories.

For another example, the value of M is 12, the value of N is 3, the M categories are cats, dogs, lions, strawberries, sofas, tea tables, apples, chestnuts, milk, wolves, tigers, and dolphins respectively, and the N categories are cats, dogs, and lions respectively. The first classification category is specifically represented as (0.01, 0.8, 0.01, 0.01, 0.02, 0.05, 0.01, 0.01, 0.01, 0.02, 0.03, 0.02), indicating the probabilities that one first query image belongs to the M categories. The second prediction result may be (0.01, 0.8, 0.01), indicating the probabilities that one first query image belongs to the N categories.

It should be understood that M may alternatively take a larger value or a smaller value, and N may alternatively take a larger value. The foregoing examples are merely for ease of understanding this solution, and are not used to limit this solution.

Specifically, the training device inputs the second feature information corresponding to the M groups of support samples, the first labeling results corresponding to the M groups of support samples, and the first feature information of each of the at least one first query sample into a second classification network, to generate the first classification category by using the second classification network, and then obtain the second prediction result from the first classification category. A difference between the second classification network and the first classification network lies in that, the second classification network can implement classification of M categories, and the first classification network can implement classification of only N categories. The second classification network may be represented as a classifier. Further, the second classification network may be represented as a linear classifier. For example, the second classification network is specifically represented as a support vector machine (support vector machine, SVM). The feature extraction network in the first neural network and the second classification network may form a second neural network. Further, a formula of the second neural network may be as follows:

$$\hbar = \text{SVM} \circ \phi; \tag{2}$$

where $\hbar$ represents the second neural network, SVM represents the second classification network, and $\phi$ represents the feature extraction network of the first neural network. It should be understood that the example herein is merely for ease of understanding this solution, and is not used to limit this solution.

In this embodiment of this application, the training device first generates the probabilities that the first query sample belongs to the M categories based on the second feature information corresponding to the M groups of support samples, the first labeling results corresponding to the M groups of support samples, and the feature information of the first query sample, and then determines the probabilities that the first query sample belongs to the N categories based on the probabilities that the first query sample belongs to the M categories, to ensure that in a few-shot task, the training device learns features of each of the M categories when classifying one first query sample, thereby improving precision of the output result of the trained first neural network.

307: The training device performs iterative training on the first neural network based on a first loss function and a second loss function, until a preset condition is met, where the first loss function indicates a similarity between the first prediction result and a second labeling result, the second loss function indicates a similarity between the first prediction result and the second prediction result, or, the second loss function indicates a similarity between the second prediction result and the second labeling result.

In this embodiment of this application, in a training process, after obtaining the first prediction result of each first query sample and the second prediction result of each first query sample, the training device may generate a function value of the first loss function and a function value of the second loss function, and perform reverse derivation by using the function value of the first loss function and the function value of the second loss function, to update weighting parameters of the first neural network, thereby completing one time of training of the first neural network.

The first loss function indicates the similarity between the first prediction result (namely, the predicted category) of each first query sample and the second labeling result (namely, the correct category) of each first query sample. The second loss function indicates the similarity between the first prediction result of each first query sample and the second prediction result of each first query sample, or the second loss function indicates the similarity between the second prediction result of each first query sample and the second labeling result of each first query sample.

Further, the first loss function may be specifically a cross entropy loss function, a relative entropy loss function, or another type of loss function, and the second loss function may be a cross entropy loss function, a relative entropy loss function, another type of loss function, or the like. No exhaustive description is provided herein.

Specifically, in a training process, after generating the function value of the first loss function and the function value of the second loss function, the training device may perform weighted summation on the function value of the first loss function and the function value of the second loss function, to obtain a total function value, and perform gradient derivation on the total function value, and reversely update the weighting parameters of the feature extraction network included in the first neural network. A weight of the function value of the first loss function and the function value of the second loss function is a hyperparameter. An example of a formula of the first loss function and the second loss function may be as follows:

$$\sum_{\left(x_j^{\mathcal{S}}, y_j^{\mathcal{S}}\right) \in \mathcal{D}_{\text{train}}^{\mathcal{S}}} \ell\left(f\left(\mathcal{D}_{\text{train}}^{\mathcal{S}}\right)\left(x_j^{\mathcal{S}}\right), y_j^{\mathcal{S}}\right) + \lambda \ell_{\text{M}}\left(f\left(\mathcal{D}_{\text{train}}^{\mathcal{S}}\right)\left(x_j^{\mathcal{S}}\right), \hbar^{\mathcal{S}}\left(x_j^{\mathcal{S}}\right)\right); \tag{3}$$

where formula (3) represents a sum of the first loss function and the second loss function, $\mathcal{D}_{\text{train}}^{\text{S}}$ represents the first sample subset corresponding to a few-shot task, $x_j^{\text{S}}$ represents the first query sample in the first sample subset, $y_j^{\text{S}}$ represents the correct category (namely, the second labeling result) of the first query sample,

$$f\left(\mathcal{D}_{\text{train}}^{\mathcal{S}}\right)$$

represents the predicted category (namely, the first prediction result) of the first query sample in the N categories,

$$\ell\left(f\left(\mathcal{D}_{\text{train}}^{\mathcal{S}}\right)\left(x_j^{\mathcal{S}}\right), y_j^{\mathcal{S}}\right)$$

represents the first loss function, and indicates the similarity between the first prediction result and the second labeling result,

$$\hbar^{\mathcal{S}}\left(x_j^{\mathcal{S}}\right)$$

represents the predicted category (namely, the second prediction result) that is of the first query sample in the N categories and that is obtained by using the second classification network,

$$\ell_M\left(f\left(\mathcal{D}_{train}^{\mathcal{S}}\right)\left(x_j^{\mathcal{S}}\right), \hbar^{\mathcal{S}}\left(x_j^{\mathcal{S}}\right)\right)$$

represents the second loss function, and indicates the similarity between the first prediction result and the second prediction result, and $\lambda$ represents the weight of the second loss function, and is a hyperparameter.

A training objective of formula (3) is to make the loss function become increasingly small, that is, the training objective is to increase the similarity between the first prediction result of each first query sample and the second labeling result of each first query sample, and increase the similarity between the first prediction result of each first query sample and the second prediction result of each first query sample. It should be understood that, formula (3) is merely an example for ease of understanding the first loss function and the second loss function, and the second loss function may be further used to indicate the similarity between the second prediction result of each first query sample and the second labeling result of each first query sample.

In one case, after performing training on the first neural network for one time based on one first sample subset corresponding to one few-shot task, the training device may go to step 303 again, to perform iterative training on the first neural network by using the same first sample subset until a first preset condition is met, and then go to step 302 again, to obtain, through sampling from the sample set, another first sample subset corresponding to another few-shot task, and further perform iterative training on the first neural network based on the another first sample subset until the first preset condition is met. The first preset condition may be that the quantity of times of iteration meets a preset quantity of times, or that a convergence condition of the first loss function and the second loss function is met. The training device repeatedly performs iterative training on the first neural network by using a preset quantity of few-shot tasks. A value of the preset quantity may be 20,000, 30,000, another quantity, or the like.

In another case, after performing training on the first neural network for one time based on one first sample subset corresponding to one few-shot task, the training device may go to step 302 again, to obtain, through sampling from the sample set, another first sample subset corresponding to another few-shot task, and further perform next-time training on the first neural network based on the another first sample subset, until a second preset condition is met. The second preset condition is that the quantity of times of iteration meets a preset quantity of times. The preset quantity of times may be 20,000, 30,000, another quantity, or the like.

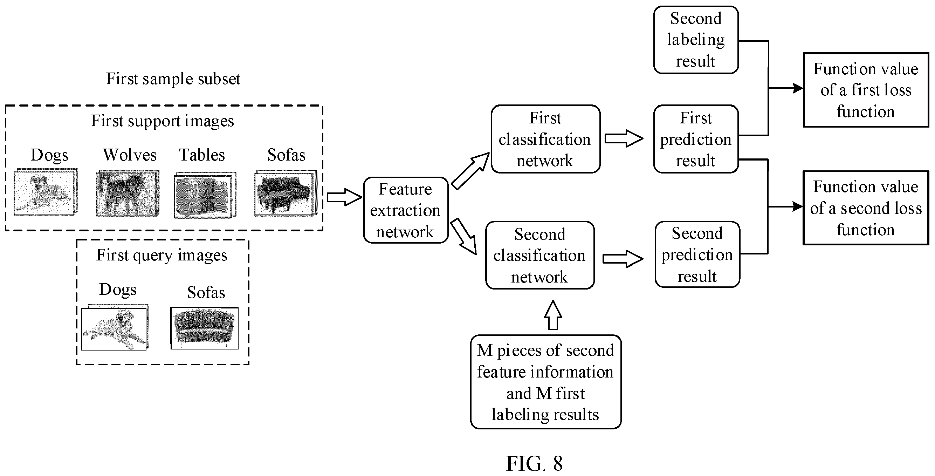

For a more intuitive understanding of this solution, refer to FIG. 8. FIG. 8 is a schematic flowchart of a method for training a neural network according to an embodiment of this application. A training device inputs a first sample subset into a feature extraction network of a first neural network, to perform feature extraction on each first support image and each first query image by using the feature extraction network, to obtain feature information of each first support image and first feature information of each first query image. The training device generates four category centers based on the feature information of each first support image. The four category centers respectively indicate features of all support images whose category is dogs, features of all support images whose category is wolves, features of all support images whose category is tables, and features of all support images whose category is sofas. The training device inputs the four category centers and the first feature information of each first query image into a first classification network, to obtain a first prediction result that is of each first query image and that is output by the first classification network. The training device inputs the first feature information of each first query image, M pieces of second feature information corresponding to M groups of support samples, and M first labeling results corresponding to the M groups of support samples into a second classification network, to obtain a second prediction result of each first query image by using the second classification network. The training device generates a function value of a first loss function based on the first prediction result of each first query image and a second labeling result of each first query image, where the first loss function indicates a similarity between the first prediction result and the second labeling result, and generates a function value of a second loss function based on the first prediction result of each first query image and the second prediction result of each first query image, where the second loss function indicates a similarity between the first prediction result and the second prediction result. The training device updates weighting parameters of the first neural network based on the function value of the first loss function and the function value of the second loss function, to implement one time of training on the first neural network. It should be understood that, the example in FIG. 8 is merely an example for ease of understanding this solution, and is not used to limit this solution.

In this embodiment of this application, optionally, after performing iterative training on the first neural network by using a plurality of few-shot tasks until a preset condition is met, the training device may obtain a plurality of trained first neural networks in one-to-one correspondence with the plurality of few-shot tasks. The training device may perform, by using a test sample set, a precision test on the plurality of trained first neural networks that are in one-to-one correspondence with the plurality of few-shot tasks, to select a trained first neural network with highest precision.

The training device may obtain, through sampling from a sample set corresponding to a target task, a few-shot task corresponding to the target task, and perform iterative training again on the trained first neural network with highest precision by using the few-shot task corresponding to the target task, until a first preset condition is met, to obtain the first neural network after final training. For a process of each training in the foregoing iterative training, refer to the description of step 302 to step 307. Details are not described herein again.

In this embodiment of this application, because the finally obtained neural network overlearns differences in a feature dimension between different samples in a same few-shot task, and ignores differences in the feature dimension between a plurality of different categories of samples corresponding to a plurality of different few-shot tasks, precision of the prediction result output by the neural network is relatively low. To resolve the foregoing problem, at a training stage of this solution, in each few-shot task, the second prediction result corresponding to the first query sample is further generated based on the second feature information corresponding to the M groups of support samples, the first labeling results corresponding to the M groups of support samples, and the feature information of the first query sample, and the second loss function is added to indicate the similarity between the first prediction result and the second prediction result, or indicate the similarity between the second prediction result and the correct result. In this way, in the process of training a few-shot task, the neural network not only can learn a feature of a support sample in a few-shot task, but also can learn features of the M groups of support samples. To be specific, during few-shot learning, the neural network not only can learn the difference in the feature dimension between different samples in one few-shot task, but also can learn the difference in the feature dimension between a plurality of different categories of samples corresponding to the plurality of different few-shot tasks, to improve precision of the output prediction result.

(2) The trained neural network is used for regression.

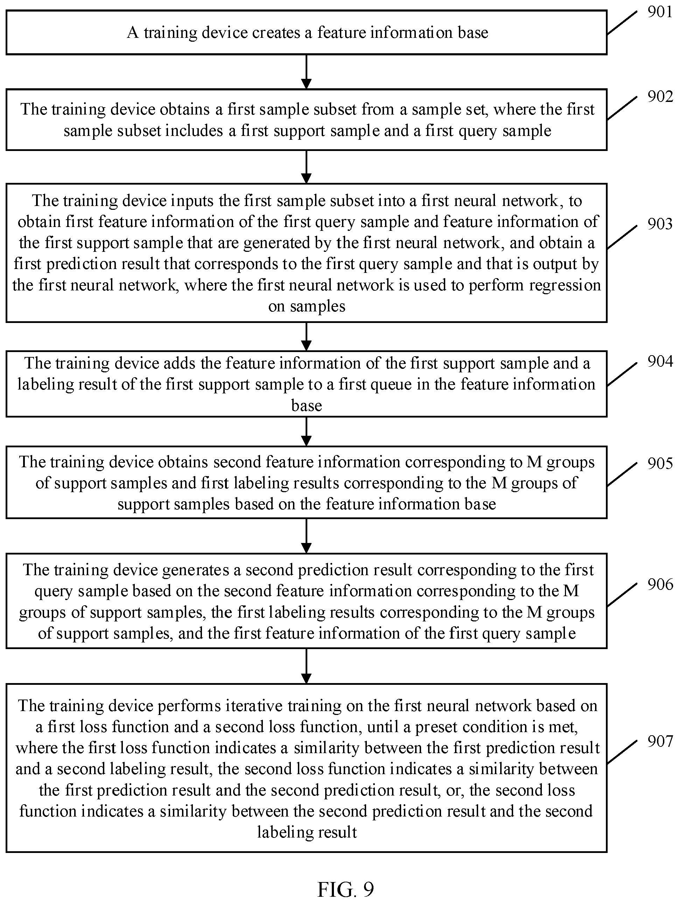

In this embodiment of this application, refer to FIG. 9. FIG. 9 is a schematic flowchart of a method for training a neural network according to an embodiment of this application. The method may include the following steps:
901: A training device creates a feature information base.

In this embodiment of this application, similar to step 301 in the embodiment corresponding to FIG. 3, in a scenario in which a trained neural network is used for regression, before training the neural network, the training device also creates a feature information base. The feature information base is also referred to as a meta-repository, and M queues included in the feature information base are in one-to-one correspondence with M groups of support samples included in a sample set. Each of the M queues is configured to store feature information corresponding to one group of support samples and labeling results corresponding to one group of support samples.

Each of the M queues further includes identification information of the entire queue and a labeling result of each support sample in the queue. Differences from the embodiment corresponding to FIG. 3 are as follows: First, in the embodiment corresponding to FIG. 3, an entire queue in the M queues may correspond to one labeling result, and a plurality of support samples in one queue may share one labeling result (that is, a correct category or label); and in the embodiment corresponding to FIG. 9, any one of the M queues includes a labeling result of each support sample, that is, a quantity of labeling results in one queue is the same as a quantity of support samples, and a labeling result of each support sample is a correct regression result of each support sample. For example, a function of a first neural network that needs to be trained is to perform personalized management on battery charging, and a labeling result of a support sample may be that charging duration is 6 hours, charging duration is 3 hours, charging duration is 9 hours, and so on. The example herein is only for ease of understanding this solution, and is not used to limit this solution.

Second, in the embodiment corresponding to FIG. 3, identification information of one of the M queues and a labeling result of an entire queue may be the same information. In the embodiment corresponding to FIG. 9, identification information of one of the M queues and a labeling result of each support sample in one queue are different information. In this application scenario, the identification information of one of the M queues may be specifically represented as character code, and the character code may be randomly generated, or may be generated according to a specific rule.
902: The training device obtains a first sample subset from the sample set, where the first sample subset includes a first support sample and a first query sample.

For a specific implementation of step 902 in this embodiment of this application, refer to the description of step 302 in the embodiment corresponding to FIG. 3. Details are not described herein again. A difference from the embodiment corresponding to FIG. 3 lies in that, in the embodiment corresponding to FIG. 3, a support sample or a query sample may be an image, a text, or speech, and a labeling result of a support sample or a query sample is a correct category of the sample; and in the embodiment corresponding to FIG. 9, the support sample and the query sample are specifically represented as to-be-regressed discrete data.

For example, the neural network is used to perform personalized management on battery charging, and a support sample or a query sample may include a mobile phone model, a battery model, a charging location, and a charging moment of a particular user. Correspondingly, a labeling result of a support sample or a query sample is correct charging duration. Because a mobile phone can control a charging speed, on the premise of charging a same amount of electricity, when predetermined charging duration is longer, the mobile phone can control the charging speed to decrease; and when the predetermined charging duration is shorter, the mobile phone can control the charging speed to increase, so as to protect a battery of the mobile phone and prolong a service life of the battery of the mobile phone. Further, for example, if the charging location is home and the charging moment is 11:00 p.m., generally, duration of connection between the mobile phone and a charger is relatively long. For example, if the charging location is an office, and the charging moment is 10:00 a.m., duration of connection between the mobile phone and the charger is relatively short. Personal habits of different users, mobile phone models, battery models, and the like may also affect outputs of the first neural network. It should be understood that the example herein is merely for ease of understanding this application scenario, and the trained first neural network may be alternatively applied to another regression scenario. This is not limited herein.

Further, in this application scenario, a grouping basis of the M groups is one or more of the following: users, locations, time, or other elements corresponding to the support samples. In this embodiment, at least one first support sample included in the first sample subset comes from a same group of the M groups, and at least one first query sample included in the first sample subset comes from a same group of the M groups. In this embodiment of this application, a plurality of grouping bases of the M groups of support samples are provided in the application scenario of regression, so that implementation flexibility of this solution is improved.

Specifically, in one case, an example in which the grouping basis is the users is used. In an implementation, after obtaining the sample set, for a support sample set included in the sample set, the training device may directly determine support samples of each user as one group of support samples. In this way, support samples of M users are determined as the M groups of support samples. In another implementation, the training device may classify the support sample set based on the users, to obtain support samples of each of the plurality of users, further obtain feature information of each user based on the support samples of each user, and perform a clustering operation based on the feature information of each of the plurality of users, thereby classifying all support samples included in the sample set into the M groups of support samples. A process of classifying all query samples included in the sample set into M groups of query samples is similar to the foregoing description, and details are not described herein again.

In another case, an example in which the grouping basis is the locations is used. In an implementation, after obtaining the sample set, for a support sample set included in the sample set, the training device may directly determine support samples of each location as one group of support samples. In this way, support samples of M locations are determined as the M groups of support samples. In another implementation, the training device may classify the support sample set based on the locations, to obtain support samples corresponding to each of the plurality of locations, further obtain feature information of each location based on the support samples corresponding to each location, and perform a clustering operation based on the feature information of each of the plurality of locations, thereby classifying all support samples included in the sample set into the M groups of support samples. A process of classifying all query samples included in the sample set into M groups of query samples is similar to the foregoing description, and details are not described herein again.

For a specific implementation in which the classification basis is the time, refer to the description of the specific implementation in which the classification basis is the users or locations. Details are not described herein again.

903: The training device inputs the first sample subset into the first neural network, to obtain first feature information of the first query sample and feature information of the first support sample that are generated by the first neural network, and obtain a first prediction result that corresponds to the first query sample and that is output by the first neural network, where the first neural network is used to perform regression on samples.

For a specific implementation of step 903 in this embodiment of this application, refer to the description of step 303 in the embodiment corresponding to FIG. 3. Details are not described herein again. The first neural network is a neural network that performs regression on samples. Specifically, the first neural network may be a fully-connected neural network. The first prediction result is specifically represented as a predicted regression result.

904: The training device adds the feature information of the first support sample and a labeling result of the first support sample to a first queue in the feature information base.

In this embodiment of this application, similar to step 304 in the embodiment corresponding to FIG. 3, for any first support sample in a plurality of first support samples, after generating feature information of one first support sample by using the first neural network, the training device adds the feature information of the first support sample to the first queue. A difference from step 304 in the embodiment corresponding to FIG. 3 lies in that, in step 904, the training device further adds a labeling result of the first support sample to the first queue. For a manner in which the training device determines a correspondence between one first support sample and one first queue, refer to the description in step 304. Details are not described herein again.

905: The training device obtains second feature information corresponding to the M groups of support samples and first labeling results corresponding to the M groups of support samples based on the feature information base.

In this embodiment of this application, similar to step 305 in the embodiment corresponding to FIG. 3, the training device obtains, through averaging, the second feature information corresponding to one of the M groups of support samples. For details, refer to the description in step 305 in the embodiment corresponding to FIG. 3.

A difference from step 305 in the embodiment corresponding to FIG. 3 lies in that, in step 905, the training device further generates M first labeling results corresponding to the M groups of support samples. Specifically, for one first labeling result corresponding to any group of support samples in the M groups of support samples, the training device obtains, from the M queues included in the feature information base, a plurality of labeling results corresponding to all support samples included in a second queue, and averages the plurality of labeling results corresponding to all the support samples included in the second queue, to obtain one first labeling result corresponding to the second queue (namely, obtain one first labeling result corresponding to one of the M groups of support samples).

906: The training device generates a second prediction result corresponding to the first query sample based on the second feature information corresponding to the M groups of support samples, the first labeling results corresponding to the M groups of support samples, and the first feature information of the first query sample.

In this embodiment of this application, similar to step 306 in the embodiment corresponding to FIG. 3, for any first query sample in one or more first query samples included in the first sample subset, after obtaining the M pieces of second feature information corresponding to the M groups of support samples and the M first labeling results corresponding to the M groups of support samples, the training device performs a similarity calculation operation based on the M pieces of second feature information and the first feature information of one first query sample, to obtain first similarity information. The first similarity information indicates a similarity between the first feature information of one first query sample and the M pieces of second feature information, that is, indicates a similarity between the first query sample and each of the M groups of support samples. The training device generates the second prediction result based on the first similarity information and the M first labeling results corresponding to the M groups of support samples.

Specifically, a difference from step 306 in the embodiment corresponding to FIG. 3 is that, in this application scenario, the training device generates a weight of each first labeling result in the M first labeling results based on a similarity between the first query sample and each of the M groups of support samples, and performs weighted summation on the M first labeling results, to generate a second prediction result of the first query result. Further, the training device may directly determine a similarity between the first query sample and one group of support samples as a weight of the first labeling result corresponding to the group of support samples. Alternatively, second-time processing may be performed on the similarity between the first query sample and one group of support samples, to obtain the weight of the first labeling result corresponding to the group of support samples, and the like. This is not limited herein.

For example, a value of M in the M first labeling results is 12, and first similarity information indicates that similarities between one first query sample and the M groups of support samples are respectively (0.01, 0.8, 0.01, 0.01, 0.02, 0.05, 0.01, 0.01, 0.01, 0.02, 0.03, 0.02). In this case, weights of first labeling results corresponding to the 12 groups of support samples are respectively (0.01, 0.8, 0.01, 0.01, 0.02, 0.05, 0.01, 0.01, 0.01, 0.02, 0.03, 0.02). It should be understood that the example herein is merely for ease of understanding this solution, and is not used to limit this solution.

907: The training device performs iterative training on the first neural network based on a first loss function and a second loss function, until a preset condition is met, where the first loss function indicates a similarity between the first prediction result and a second labeling result, the second loss function indicates a similarity between the first prediction result and the second prediction result, or, the second loss function indicates a similarity between the second prediction result and the second labeling result.

For a specific implementation of step 907 in this embodiment of this application, refer to the description of step 307 in the embodiment corresponding to FIG. 3. Details are not described herein again. Another example of a formula of the first loss function and the second loss function is disclosed as follows:

$$\sum_{\left(x_j^S, y_j^S\right) \in \mathcal{D}_{\text{test}}^S} \ell\left(f\left(\mathcal{D}_{\text{train}}^S\right)\left(x_j^S\right), y_j^S\right) + \lambda \ell_M\left(\hbar^S\left(x_j^S\right)\left(x_j^S\right), y_j^S\right); \qquad (4)$$

where formula (4) represents a sum of the first loss function and the second loss function, $\mathcal{D}_{\text{train}}^S$ represents the first sample subset corresponding to a few-shot task, $x_j^S$ represents the first query sample in the first sample subset, $y_j^S$ represents a correct regression result (namely, the second labeling result) of the first query sample, $f\left(\mathcal{D}_{\text{train}}^S\right)$ represents a predicted regression result (namely, the first prediction result) of the first query sample, $\ell\left(f\left(\mathcal{D}_{\text{train}}^S\right)\left(x_j^S\right), y_j^S\right)$ represents the first loss function, and indicates the similarity between the first prediction result and the second labeling result,

$$\hbar^S\left(x_j^S\right)$$

represents the second prediction result obtained through step 906,

$$\ell_{\mathrm{M}}\big(\mathrm{f}\big(\mathcal{D}^{\mathcal{S}}_{\mathrm{train}}\big)\big(\mathrm{x}^{\mathcal{S}}_{\mathrm{j}}\big),\mathrm{y}^{\mathcal{S}}_{\mathrm{j}}\big)$$

represents the second loss function, and indicates the similarity between the second prediction result and the second labeling result, and $\lambda$ represents a weight of the second loss function, and is a hyperparameter.

A training objective of formula (4) is to make the loss function become increasingly small, that is, the training objective is to increase the similarity between the first prediction result of each first query sample and the second labeling result of each first query sample, and increase the similarity between the second prediction result of each first query sample and the second labeling result of each first query sample. It should be understood that, formula (4) is merely an example for ease of understanding the first loss function and the second loss function, and is not used to limit this solution.

In this embodiment of this application, the trained first neural network not only can be used to classify samples, but also can be used to perform regression on the samples, so that application scenarios of this solution are expanded.

In this embodiment of this application, the first neural network may be a fully-connected neural network, a convolutional neural network, or a residual neural network, so that implementation flexibility of this solution is improved.

II. Reasoning stage

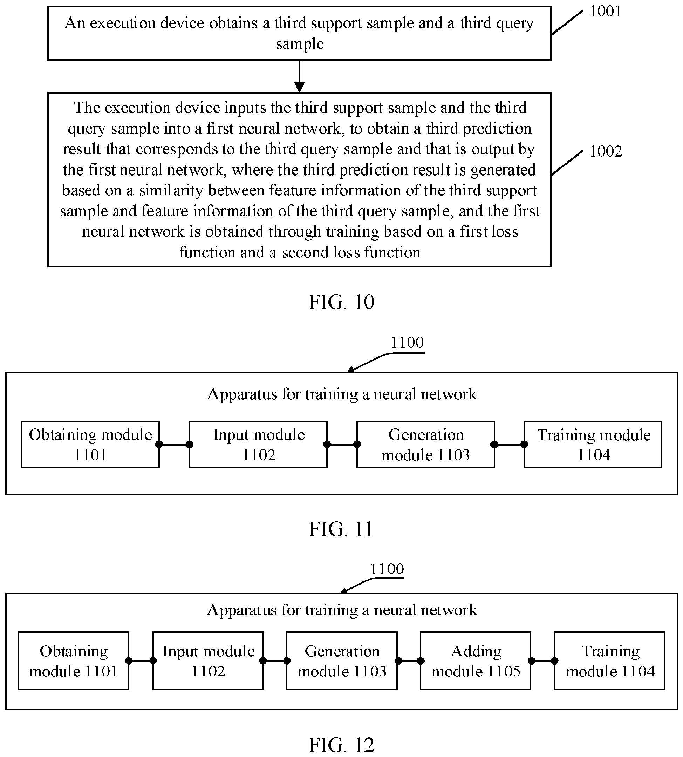

In this embodiment of this application, the reasoning stage is a process in which the execution device 210 in FIG. 2 processes samples by using the trained target model/rule 201. FIG. 10 is a schematic flowchart of a sample processing method according to an embodiment of this application. The method may include the following steps:
1001: An execution device obtains a third support sample and a third query sample.

In this embodiment of this application, after obtaining a trained first neural network and before reasoning each time, the execution device needs to first obtain N categories of third support samples and n third query samples. A meaning of the third support sample is similar to that of the first support sample. A meaning of the third query sample is similar to that of the first query sample. For details, refer to the descriptions in step 302 and step 902. Details are not described herein again.
1002: The execution device inputs the third support sample and the third query sample into the first neural network, to obtain a third prediction result that corresponds to the third query sample and that is output by the first neural network, where the third prediction result is generated based on a similarity between feature information of the third support sample and feature information of the third query sample, and the first neural network is obtained through training based on a first loss function and a second loss function.

For a specific implementation of step 1002 in this embodiment of this application, refer to the descriptions of step 303 in the embodiment corresponding to FIG. 3 and step 903 in the embodiment corresponding to FIG. 9. Details are not described herein again.

The first loss function indicates a similarity between the prediction result output by the first neural network and a correct result, the second loss function indicates a similarity between the prediction result output by the first neural network and a second prediction result corresponding to the third query sample, or, the second loss function indicates a similarity between the second prediction result and the correct result, where the second prediction result is obtained based on second feature information corresponding to M groups of support samples, correct results corresponding to the M groups of support samples, and the feature information of the third query sample, the third support sample can belong to a third group of support samples, the third query sample can belong to a third group of query samples, and the third group is one of the M groups.

A meaning of the third prediction result is similar to that of the second prediction result. For meanings of the second prediction result, the first loss function, and the second loss function, refer to descriptions in the embodiments corresponding to FIG. 3 and FIG. 9. Details are not described herein again.

In this embodiment of this application, because the finally obtained neural network overlearns differences in a feature dimension between different samples in a same few-shot task, and ignores differences in the feature dimension between a plurality of different categories of samples corresponding to a plurality of different few-shot tasks, precision of the prediction result output by the neural network is relatively low. The first neural network is generated through training based on the first loss function and the second loss function, the second loss function indicates the similarity between the first prediction result and the second prediction result, or indicates the similarity between the second prediction result and the correct result. The second prediction result is generated based on the second feature information corresponding to the M groups of support samples, first labeling results corresponding to the M groups of support samples, and the feature information of the first query sample. The trained neural network not only learns differences in a feature dimension between different samples in a same few-shot task, but also can learn differences in the feature dimension between a plurality of different categories of samples corresponding to a plurality of few-shot tasks, so that precision of the result output by the neural network is relatively high.

To further understand beneficial effects, the following displays effects brought by embodiments of this application with reference to data. Verification is performed on a public image set MiniImageNet, and the results are shown in the following Table 1 and Table 2.

**Table 1**

| Training method | 5-way 1-shot | | 5-way 5-shot | |
|---|---|---|---|---|
| | Convolutional neural network | Residual neural network | Convolutional neural network | Residual neural network |
| Proto | 49.42 | - | 68.2 | - |
| FEAT | 55.15 | 62.96 | 71.61 | 78.49 |
| Embodiments of this application | 55.37 | 67.18 | 72.27 | 82.59 |

As shown in Table 1, the 5-way 1-shot means that one few-shot task includes five categories of first support samples, and each category of first support samples includes one first support sample, and the 5-way 5-shot means that one few-shot task includes five categories of first support samples, and each category of first support samples includes five first support samples. Proto and FEAT (few-shot embedding adaptation w/ transformer) are two current meta-learning training methods. When the few-shot task is the 5-way 1-shot and the convolutional neural network is selected as the first neural network, precision of the trained first neural network obtained through training in the Proto manner is 49.42, precision of the trained first neural network obtained through training in the FEAT manner is 55.15, and precision of the trained first neural network obtained through training in the manner in embodiments of this application is 55.37. Other data in Table 1 may be understood by analogy, and details are not described herein again. Clearly, by using the training method provided in embodiments of this application, in a few-shot scenario, precision of the trained first neural network is improved.

**Table 2**

| 5-way 30-shot | Convolutional neural network | Residual neural network |
|---|---|---|
| Proto | 77.01±0.14 | 87.64±0.40 |
| FEAT | 78.53±0.56 | 87.92±0.42 |
| Embodiments of this application | 80.26±0.50 | 88.20±0.41 |

As shown in Table 2, the 5-way 30-shot means that one few-shot task includes five categories of first support samples, and each category of first support samples includes 30 first support samples. When the convolutional neural network is selected as the first neural network, precision of the trained first neural network obtained through training in the Proto manner is 77.01±0.14, precision of the trained first neural network obtained through training in the FEAT manner is 78.53±0.56, and precision of the trained first neural network obtained through training in the manner in embodiments of this application is 80.26±0.50. Other data in Table 1 may be understood by analogy, and details are not described herein again. Clearly, by using the training method provided in embodiments of this application, in a medium-quantity sample scenario, precision of the trained first neural network is improved.

Based on the embodiments corresponding to FIG. 1 to FIG. 10, to better implement the foregoing solutions in embodiments of this application, the following further provides related devices configured to implement the foregoing solutions. Specifically, FIG. 11 is a schematic diagram of a structure of an apparatus for training a neural network according to an embodiment of this application. The apparatus 1100 for training a neural network may include an obtaining module 1101, an input module 1102, a generation module 1103, and a training module 1104. The obtaining module 1101 is configured to obtain a first sample subset from a sample set, where the sample set includes M groups of support samples and M groups of query samples, and the first sample subset includes a first support sample and a first query sample; the input module 1102 is configured to: input the first sample subset into a first neural network, where the first neural network generates first feature information of the first query sample, and obtain a first prediction result that corresponds to the first query sample and that is output by the first neural network, where the first prediction result is generated based on a similarity between feature information of the first support sample and the first feature information; the generation module 1103 is configured to generate a second prediction result corresponding to the first query sample based on second feature information corresponding to the M groups of support samples, first labeling results corresponding to the M groups of support samples, and the first feature information of the first query sample, where each of the first labeling results indicates a correct result corresponding to one of the M groups of support samples; and the training module 1104 is configured to perform iterative training on the first neural network based on a first loss function and a second loss function, until a preset condition is met. The first loss function indicates a similarity between the first prediction result and a second labeling result, the second loss function indicates a similarity between the first prediction result and the second prediction result, or, the second loss function indicates a similarity between the second prediction result and the second labeling result, and the second labeling result is a correct result of the first query sample.

In a possible design, FIG. 12 is a schematic diagram of a structure of an apparatus for training a neural network according to an embodiment of this application. The generation module 1103 is further configured to generate the feature information of the first support sample by using the first neural network, where the first support sample is selected from a first group, and the first group is one of the M groups. The apparatus 1100 for training a neural network further includes: an adding module 1105, configured to add the feature information of the first support sample to a first queue of a feature information base, where the feature information base includes M queues in one-to-one correspondence with the M groups of support samples, the first queue is a queue corresponding to the first group in the M queues, and is configured to store feature information corresponding to the first group of support samples; and the obtaining module 1101 is further configured to obtain the second feature information corresponding to the M groups of support samples based on the feature information base.

In a possible design, a second queue is any queue in the M queues, and the second queue includes feature information of at least one support sample, and the obtaining module 1101 is specifically configured to average the feature information of all the support samples included in the second queue, to obtain one piece of second feature information corresponding to the second queue.

In a possible design, the generation module 1103 is specifically configured to: perform a similarity calculation operation based on the second feature information and the first feature information, to obtain first similarity information, where the first similarity information indicates a similarity between the first query sample and each of the M groups of support samples; and generate the second prediction result based on the first similarity information and the first labeling results.

In a possible design, the first neural network is a neural network that classifies samples, the first sample subset includes N categories of first support samples, and the first prediction result indicates a predicted category of the first query sample in the N categories; and the generation module 1103 is specifically configured to: generate a first classification category based on the second feature information corresponding to the M groups of support samples, the first labeling results corresponding to the M groups of support samples, and the feature information of the first query sample, where the first classification category indicates a predicted category of the first query sample in M categories; and obtain the second prediction result from the first classification category, where the second prediction result indicates the predicted category of the first query sample in the N categories.

In a possible design, the first neural network is a neural network that performs regression on samples.

In a possible design, a grouping basis of the M groups is one or more of the following: users, locations, or time corresponding to the support samples.

In a possible design, at least one first support sample included in the first sample subset comes from a same group of the M groups, and at least one first query sample included in the first sample subset comes from a same group of the M groups.

In a possible design, the first neural network is any one of the following neural networks: a fully-connected neural network, a convolutional neural network, or a residual neural network.

It should be noted that content such as information exchange and an execution process between the modules/units in the apparatus 1100 for training a neural network is based on a same concept as the method embodiments corresponding to FIG. 3 to FIG. 9 in this application. For specific content, refer to the descriptions in the foregoing method embodiments in this application. Details are not described herein again.

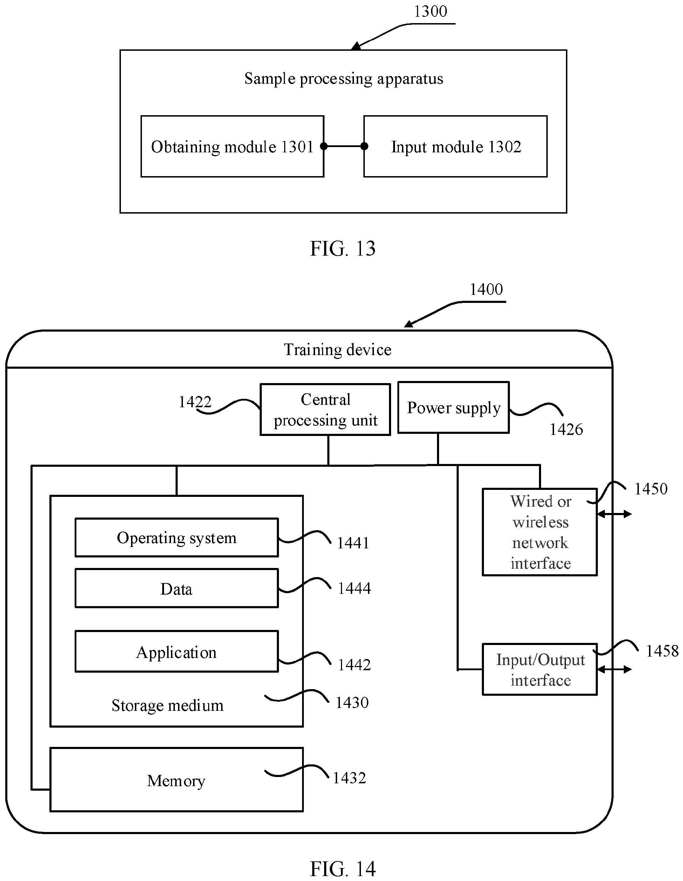

An embodiment of this application further provides a sample processing apparatus. Refer to FIG. 13 for details. FIG. 13 is a schematic diagram of a structure of a sample processing apparatus according to an embodiment of this application. The sample processing apparatus 1300 may include an obtaining module 1301 and an input module 1302. The obtaining module 1301 is configured to obtain a third support sample and a third query sample; and the input module 1302 is configured to input the third support sample and the third query sample into a first neural network, to obtain a third prediction result that corresponds to the third query sample and that is output by the first neural network, where the third prediction result is generated based on a similarity between feature information of the third support sample and feature information of the third query sample. The first neural network is obtained through training based on a first loss function and a second loss function, the first loss function indicates a similarity between the prediction result output by the first neural network and a correct result, the second loss function indicates a similarity between the prediction result output by the first neural network and a second prediction result corresponding to the third query sample, or, the second loss function indicates a similarity between the second prediction result and the correct result, where the second prediction result is obtained based on second feature information corresponding to M groups of support samples, correct results corresponding to the M groups of support samples, and the feature information of the third query sample, the third support sample can belong to a third group of support samples, the third query sample can belong to a third group of query samples, and the third group is one of the M groups.

It should be noted that content such as information exchange and an execution process between the modules/units in the sample processing apparatus 1300 is based on a same concept as the method embodiment corresponding to FIG. 10 in this application. For specific content, refer to the descriptions in the foregoing method embodiment in this application. Details are not described herein again.

An embodiment of this application further provides a training device. FIG. 14 is a schematic diagram of a structure of a training device according to an embodiment of this application. The apparatus 1100 for training a neural network in the embodiments corresponding to FIG. 11 and FIG. 12 may be deployed on the training device 1400, for implementing functions of the training device in the embodiments corresponding to FIG. 3 to FIG. 9. Specifically, the training device 1400 is implemented by one or more servers. The training device 1400 may greatly differ due to different configurations or performance, and may include one or more central processing units (central processing units, CPU) 1422 (for example, one or more processors), a memory 1432, one or more storage media 1430 (for example, one or more mass storage devices) that store an application 1442 or data 1444. The memory 1432 and the storage medium 1430 may be transient storage or persistent storage. A program stored in the storage medium 1430 may include one or more modules (not shown in the figure), and each module may include a series of instruction operations performed on the access device. Further, the central processing unit 1422 may be configured to communicate with the storage medium 1430, and perform, on the training device 1400, the series of instruction operations in the storage medium 1430.

The training device 1400 may further include one or more power supplies 1426, one or more wired or wireless network interfaces 1450, one or more input/output interfaces 1458, and/or one or more operating systems 1441, such as Windows ServerTM, Mac OS XTM, UnixTM, LinuxTM, and FreeBSDTM.

In this embodiment of this application, when the central processing unit 1422 is configured to perform the method for training a neural network performed by the training device in the embodiments corresponding to FIG. 3 to FIG. 9, specifically, the central processing unit 1422 is configured to: obtain a first sample subset from a sample set, where the sample set includes M groups of support samples and M groups of query samples, and the first sample subset includes a first support sample and a first query sample; input the first sample subset into a first neural network, where the first neural network generates first feature information of the first query sample, and obtain a first prediction result that corresponds to the first query sample and that is output by the first neural network, where the first prediction result is generated based on a similarity between feature information of the first support sample and the first feature information; generate a second prediction result corresponding to the first query sample based on second feature information corresponding to the M groups of support samples, first labeling results corresponding to the M groups of support samples, and the first feature information of the first query sample, where each of the first labeling results indicates a correct result corresponding to one of the M groups of support samples; and perform iterative training on the first neural network based on a first loss function and a second loss function, until a preset condition is met. The first loss function indicates a similarity between the first prediction result and a second labeling result, the second loss function indicates a similarity between the first prediction result and the second prediction result, or, the second loss function indicates a similarity between the second prediction result and the second labeling result, and the second labeling result is a correct result of the first query sample.

It should be noted that, for specific implementations in which the central processing unit 1422 performs the method for training a neural network in the embodiments corresponding to FIG. 3 to FIG. 9 and beneficial effects brought thereby, refer to descriptions in the method embodiments corresponding to FIG. 3 to FIG. 9. Details are not described herein again.

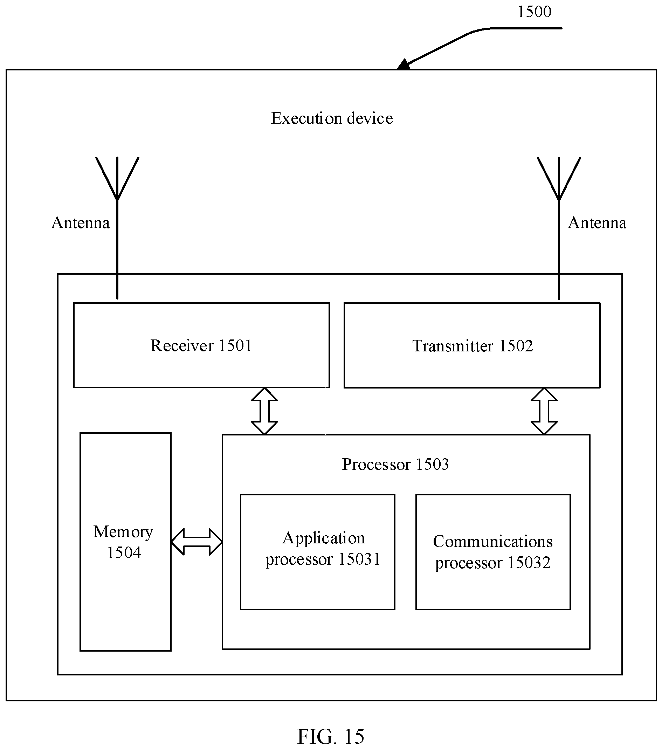

An embodiment of this application further provides an execution device. FIG. 15 is a schematic diagram of a structure of an execution device according to an embodiment of this application. The sample processing apparatus 1300 described in the embodiment corresponding to FIG. 13 may be deployed on the execution device 1500, for implementing functions of the execution device in the embodiment corresponding to FIG. 10. Specifically, the execution device 1500 includes: a receiver 1501, a transmitter 1502, a processor 1503, and a memory 1504 (there may be one or more processors 1503 in the execution device 1500, and one processor is used as an example in FIG. 15), where the processor 1503 may include an application processor 15031 and a communications processor 15032. In some embodiments of this application, the receiver 1501, the transmitter 1502, the processor 1503, and the memory 1504 may be connected through a bus or in another manner.

The memory 1504 may include a read-only memory and a random access memory, and provide instructions and data to the processor 1503. A part of the memory 1504 may further include a non-volatile random access memory (non-volatile random access memory, NVRAM). The memory 1504 stores a processor and operation instructions, an executable module or a data structure, a subnet thereof, or an extended set thereof. The operation instructions may include various operation instructions to implement various operations.

The processor 1503 controls an operation of the execution device. During specific application, the components of the execution device are coupled together through a bus system. In addition to a data bus, the bus system may further include a power bus, a control bus, a status signal bus, and the like. However, for clear description, various buses in the figure are referred to as the bus system.

The method disclosed in the foregoing embodiment of this application may be applied to the processor 1503, or implemented by the processor 1503. The processor 1503 may be an integrated circuit chip, and has a signal processing capability. In an implementation process, steps in the foregoing methods may be implemented by using a hardware integrated logical circuit in the processor 1503, or by using instructions in a form of software. The processor 1503 may be a general-purpose processor, a digital signal processor (DSP), a microprocessor, or a microcontroller. The processor 1503 may further include an application-specific integrated circuit (ASIC), a field programmable gate array (FPGA) or another programmable logic device, a discrete gate, or a transistor logic device, or a discrete hardware component. The processor 1503 may implement or perform the methods, the steps, and logical block diagrams that are disclosed in embodiments of this application. The general-purpose processor may be a microprocessor, or the processor may be any conventional processor or the like. Steps of the methods disclosed with reference to embodiments of this application may be directly executed and accomplished by means of a hardware decoding processor, or may be executed and accomplished by using a combination of hardware and software modules in the decoding processor. A software module may be located in a mature storage medium in the art, such as a random access memory, a flash memory, a read-only memory, a programmable read-only memory, an electrically erasable programmable memory, or a register. The storage medium is located in the memory 1504, and the processor 1503 reads information in the memory 1504 and completes the steps in the foregoing methods in combination with hardware in the processor 1503.

The receiver 1501 may be configured to: receive input digital or character information, and generate a signal input related to a related setting and function control of the execution device. The transmitter 1502 may be configured to output digital or character information through a first interface. The transmitter 1502 may be further configured to send instructions to a disk group through the first interface, to modify data in the disk group. The transmitter 1502 may further include a display device such as a display.

In this embodiment of this application, the application processor 15031 is configured to perform a function of the execution device in the embodiment corresponding to FIG. 10. It should be noted that, for a specific implementation in which the application processor 15031 performs the function of the execution device in the embodiment corresponding to FIG. 10, and beneficial effects brought thereby, refer to descriptions in the method embodiment corresponding to FIG. 10. Details are not described herein again.

An embodiment of this application further provides a computer-readable storage medium. The computer-readable storage medium stores a program. When the program is run on a computer, the computer is enabled to perform the steps performed by the training device in the method described in the embodiments shown in FIG. 3 to FIG. 9, or the computer is enabled to perform the steps performed by the execution device in the method described in the embodiment shown in FIG. 10.

An embodiment of this application further provides a computer program product. When the computer program product runs on a computer, the computer is enabled to perform the steps performed by the training device in the methods described in the embodiments shown in FIG. 3 to FIG. 9, or the computer is enabled to perform the steps performed by the execution device in the method described in the embodiment shown in FIG. 10.

An embodiment of this application further provides a circuit system. The circuit system includes a processing circuit. The processing circuit is configured to perform the steps performed by the training device in the methods described in the embodiments shown in FIG. 3 to FIG. 9, or the processing circuit is configured to perform the steps performed by the execution device in the method described in the embodiment shown in FIG. 10.

The apparatus for training a neural network or the execution device provided in embodiments of this application may be specifically a chip. The chip includes a processing unit and a communications unit. The processing unit may be, for example, a processor. The communications unit may be, for example, an input/output interface, a pin, or a circuit. The processing unit may execute computer-executable instructions stored in a storage unit, to enable a chip in the training device to perform the method for training a neural network described in the embodiments shown in FIG. 3 to FIG. 9, or enable the chip in the training device to perform the sample processing method described in the embodiment shown in FIG. 10. Optionally, the storage unit is a storage unit in the chip, for example, a register or a cache; or the storage unit may be a storage unit that is in the radio access device end and that is located outside the chip, for example, a read-only memory (ROM), another type of static storage device that can store static information and instructions, or a random access memory (RAM).

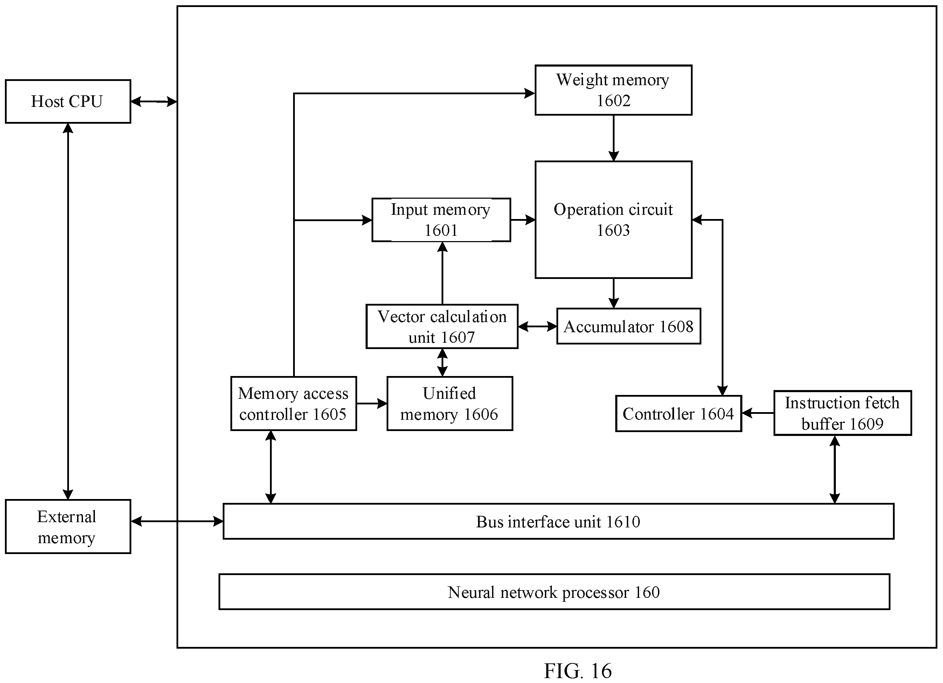

Specifically, FIG. 16 is a schematic diagram of a structure of a chip according to an embodiment of this application. The chip may be represented as a neural network processing unit NPU 160. The NPU 160 is mounted to a host CPU as a coprocessor, and the host CPU allocates a task. A core part of the NPU is an operation circuit 1603. The operation circuit 1603 is controlled by a controller 1604 to extract matrix data in a memory and perform a multiplication operation.

In some implementations, the operation circuit 1603 includes a plurality of processing units (Process Engine, PE). In some implementations, the operation circuit 1603 is a two-dimensional systolic array. The operation circuit 1603 may be alternatively a one-dimensional systolic array or another electronic circuit that can perform mathematical operations such as multiplication and addition. In some implementations, the operation circuit 1603 is a general-purpose matrix processor.

For example, it is assumed that there is an input matrix A, a weight matrix B, and an output matrix C. The operation circuit fetches data corresponding to the matrix B from a weight memory 1602 and buffers the data on each PE in the operation circuit. The operation circuit fetches data of the matrix A from an input memory 1601, to perform a matrix operation with the matrix B to obtain a partial result or a final result of a matrix, and stores the result into an accumulator (accumulator) 1608.

A unified memory 1606 is configured to store input data and output data. Weight data is directly transferred to the weight memory 1602 by using a direct memory access controller (DMAC) 1605. The input data is also transferred to the unified memory 1606 by using the DMAC.

A BIU is a bus interface unit, namely, a bus interface unit 1610, and is configured to perform interaction between an AXI bus, and the DMAC and an instruction fetch buffer (IFB) 1609.

The bus interface unit 1610 (BIU) is used by the instruction fetch buffer 1609 to obtain an instruction from an external memory, and further used by the memory access controller 1605 to obtain original data of the input matrix A or the weight matrix B from the external memory.

The DMAC is mainly configured to: transfer input data in an external memory DDR to the unified memory 1606, transfer the weight data to the weight memory 1602, or transfer the input data to the input memory 1601.

A vector calculation unit 1607 includes a plurality of operation processing units. When necessary, further processing is performed on an output of the operation circuit, such as vector multiplication, vector addition, exponential operation, logarithmic operation, and value comparison. The vector calculation unit 1607 is mainly configured to perform network calculation, such as batch normalization, pixel-level summation, and upsampling of a feature plane, on a non-convolutional/fully-connected layer in a neural network.

In some implementations, the vector calculation unit 1607 can store, into the unified memory 1606, a processed output vector. For example, the vector calculation unit 1607 may apply a linear function and/or a non-linear function to the output of the operation circuit 1603, for example, perform linear interpolation on a feature plane extracted at a convolutional layer. For another example, a linear function and/or a non-linear function is applied to a vector of an accumulated value to generate an activation value. In some implementations, the vector calculation unit 1607 generates a normalized value, a pixel-level sum, or a normalized value and a pixel-level sum. In some implementations, the processed output vector can be used as an activation input to the operation circuit 1603, for example, the processed output vector is used in a subsequent layer in the neural network.

The IFB 1609 connected to the controller 1604 is configured to store an instruction used by the controller 1604. The unified memory 1606, the input memory 1601, the weight memory 1602, and the instruction fetch buffer 1609 are all on-chip memories. The external memory is private for a hardware architecture of the NPU.

An operation at each layer in a recurrent neural network may be performed by the operation circuit 1603 or the vector calculation unit 1607.

The processor mentioned above may be a general-purpose central processing unit, a microprocessor, an ASIC, or one or more integrated circuits that are used to control execution of the program in the method in the first aspect.

In addition, it should be noted that the described apparatus embodiment is merely an example. The units described as separate parts may or may not be physically separate, and parts displayed as units may or may not be physical units, that is, may be located in one place, or may be distributed on a plurality of network units. Some or all the modules may be selected according to an actual need to achieve the objectives of the solutions of the embodiments. In addition, in the accompanying drawings of the apparatus embodiments provided by this application, connection relationships between modules indicate that the modules have communication connections with each other, which may be specifically implemented as one or more communications buses or signal cables.

Based on the description of the foregoing implementations, a person skilled in the art may clearly understand that this application may be implemented by software in addition to necessary universal hardware, or certainly may be implemented by dedicated hardware, including a dedicated integrated circuit, a dedicated CLU, a dedicated memory, a dedicated component, and the like. Generally, any functions that can be performed by a computer program can be easily implemented by using corresponding hardware. Moreover, a specific hardware structure used to achieve a same function may be in various forms, for example, in a form of an analog circuit, a digital circuit, or a dedicated circuit. However, as for this application, software program implementation is a better implementation in most cases. Based on such an understanding, the technical solutions of this application essentially or the part contributing to the conventional technology may be implemented in a form of a software product. The computer software product is stored in a readable storage medium, such as a floppy disk, a USB flash drive, a removable hard disk, a ROM, a RAM, a magnetic disk, or an optical disc of a computer, and includes several instructions for instructing a computer device (which may be a personal computer, a server, or a network device) to perform the methods described in embodiments of this application.

All or some of the foregoing embodiments may be implemented by using software, hardware, firmware, or any combination thereof. When software is used to implement the embodiments, all or a part of the embodiments may be implemented in a form of a computer program product.

The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state drive (SSD)), or the like.

**Claims**

1. A method for training a neural network, wherein the method comprises:

   obtaining a first sample subset from a sample set, wherein the sample set comprises M groups of support samples, and the first sample subset comprises a first support sample and a first query sample;
   inputting the first sample subset into a first neural network, wherein the first neural network generates first feature information of the first query sample, and obtaining a first prediction result that corresponds to the first query sample and that is output by the first neural network, wherein the first prediction result is generated based on a similarity between feature information of the first support sample and the first feature information;
   generating a second prediction result corresponding to the first query sample based on second feature information corresponding to the M groups of support samples, first labeling results corresponding to the M groups of support samples, and the first feature information of the first query sample, wherein each of the first labeling results indicates a correct result corresponding to one of the M groups of support samples; and
   training the first neural network based on a first loss function and a second loss function, until a preset condition is met, wherein
   the first loss function indicates a similarity between the first prediction result and a second labeling result, the second loss function indicates a similarity between the first prediction result and the second prediction result, or, the second loss function indicates a similarity between the second prediction result and the second labeling result, and the second labeling result is a correct result of the first query sample.

2. The method according to claim 1, wherein after the inputting the first sample subset into the first neural network, the method further comprises:

   generating the feature information of the first support sample by using the first neural network, wherein the first support sample is selected from a first group, and the first group is one of the M groups;
   adding the feature information of the first support sample to a first queue of a feature information base, wherein the feature information base comprises M queues in one-to-one correspondence with the M groups of support samples, the first queue is a queue corresponding to the first group in the M queues, and is configured to store feature information corresponding to the first group of support samples; and
   before the generating a second prediction result corresponding to the first query sample based on second feature information corresponding to the M groups of support samples, first labeling results corresponding to the M groups of support samples, and the first feature information, the method further comprises:
   obtaining the second feature information corresponding to the M groups of support samples based on the feature information base.

3. The method according to claim 2, wherein a second queue is any queue in the M queues, the second queue comprises feature information of at least one support sample, and the obtaining the second feature information corresponding to the M groups of support samples based on the feature information base comprises:

averaging the feature information of all the support samples comprised in the second queue, to obtain one piece of second feature information corresponding to the second queue.

4. The method according to claim 1, wherein the generating the second prediction result corresponding to the first query sample based on second feature information corresponding to the M groups of support samples, first labeling results corresponding to the M groups of support samples, and the first feature information comprises:

performing a similarity calculation operation based on the second feature information and the first feature information, to obtain first similarity information, wherein the first similarity information indicates a similarity between the first query sample and each of the M groups of support samples; and
generating the second prediction result based on the first similarity information and the first labeling results.

5. The method according to any one of claims 1 to 4, wherein the first neural network is a neural network that classifies samples, the first sample subset comprises N categories of first support samples, and the first prediction result indicates a predicted category of the first query sample in the N categories; and

the generating a second prediction result corresponding to the first query sample based on second feature information corresponding to the M groups of support samples, first labeling results corresponding to the M groups of support samples, and the first feature information of the first query sample comprises:
generating a first classification category based on the second feature information corresponding to the M groups of support samples, the first labeling results corresponding to the M groups of support samples, and the first feature information of the first query sample, wherein the first classification category indicates a predicted category of the first query sample in M categories; and
obtaining the second prediction result from the first classification category, wherein the second prediction result indicates the predicted category of the first query sample in the N categories.

6. The method according to any one of claims 1 to 4, wherein the first neural network is a neural network that performs regression on samples.

7. The method according to claim 6, wherein a grouping basis of the M groups is one or more of the following: users, locations, or time corresponding to the support samples.

8. The method according to claim 6, wherein at least one first support sample comprised in the first sample subset comes from a same group of the M groups, and at least one first query sample comprised in the first sample subset comes from a same group of the M groups.

9. The method according to any one of claims 1 to 4, wherein the first neural network is any one of the following neural networks: a fully-connected neural network, a convolutional neural network, or a residual neural network.

10. A sample processing method, wherein the method comprises:

obtaining a third support sample and a third query sample; and
inputting the third support sample and the third query sample into a first neural network, to obtain a third prediction result that corresponds to the third query sample and that is output by the first neural network, wherein the third prediction result is generated based on a similarity between feature information of the third support sample and feature information of the third query sample, wherein
the first neural network is obtained through training based on a first loss function and a second loss function, the first loss function indicates a similarity between the prediction result output by the first neural network and a correct result, the second loss function indicates a similarity between the prediction result output by the first neural network and a second prediction result corresponding to the third query sample, or, the second loss function indicates a similarity between the second prediction result and the correct result, wherein the second prediction result is obtained based on second feature information corresponding to M groups of support samples, correct results corresponding to the M groups of support samples, and the feature information of the third query sample, the third support sample can belong to a third group of support samples, the third query sample can belong to a third group of query samples, and the third group is one of the M groups.

11. An apparatus for training a neural network, wherein the apparatus comprises:

an obtaining module, configured to obtain a first sample subset from a sample set, wherein the sample set comprises M groups of support samples, and the first sample subset comprises a first support sample and a first query sample;

an input module, configured to: input the first sample subset into a first neural network, wherein the first neural network generates first feature information of the first query sample, and obtain a first prediction result that corresponds to the first query sample and that is output by the first neural network, wherein the first prediction result is generated based on a similarity between feature information of the first support sample and the first feature information;

a generation module, configured to generate a second prediction result corresponding to the first query sample based on second feature information corresponding to the M groups of support samples, first labeling results corresponding to the M groups of support samples, and the first feature information of the first query sample, wherein each of the first labeling results indicates a correct result corresponding to one of the M groups of support samples; and

a training module, configured to perform iterative training on the first neural network based on a first loss function and a second loss function, until a preset condition is met, wherein

the first loss function indicates a similarity between the first prediction result and a second labeling result, the second loss function indicates a similarity between the first prediction result and the second prediction result, or, the second loss function indicates a similarity between the second prediction result and the second labeling result, and the second labeling result is a correct result of the first query sample.

**12.** The apparatus according to claim 11, wherein

the generation module is further configured to generate the feature information of the first support sample by using the first neural network, wherein the first support sample is selected from a first group, and the first group is one of the M groups;

the apparatus further comprises an adding module, configured to add the feature information of the first support sample to a first queue of a feature information base, wherein the feature information base comprises M queues in one-to-one correspondence with the M groups of support samples, the first queue is a queue corresponding to the first group in the M queues, and is configured to store feature information corresponding to the first group of support samples; and

the obtaining module is further configured to obtain the second feature information corresponding to the M groups of support samples based on the feature information base.

**13.** The apparatus according to claim 12, wherein a second queue is any queue in the M queues, and the second queue comprises feature information of at least one support sample, and

the obtaining module is specifically configured to average the feature information of all the support samples comprised in the second queue, to obtain one piece of second feature information corresponding to the second queue.

**14.** The apparatus according to claim 11, wherein the generation module is specifically configured to:

perform a similarity calculation operation based on the second feature information and the first feature information, to obtain first similarity information, wherein the first similarity information indicates a similarity between the first query sample and each of the M groups of support samples; and

generate the second prediction result based on the first similarity information and the first labeling results.

**15.** The apparatus according to any one of claims 11 to 14, wherein the first neural network is a neural network that classifies samples, the first sample subset comprises N categories of first support samples, and the first prediction result indicates a predicted category of the first query sample in the N categories; and

the generation module is specifically configured to:

generate a first classification category based on the second feature information corresponding to the M groups of support samples, the first labeling results corresponding to the M groups of support samples, and the first feature information of the first query sample, wherein the first classification category indicates a predicted category of the first query sample in M categories; and

obtain the second prediction result from the first classification category, wherein the second prediction result indicates the predicted category of the first query sample in the N categories.

**16.** The apparatus according to any one of claims 11 to 14, wherein the first neural network is a neural network that performs regression on samples.

17. The apparatus according to claim 16, wherein a grouping basis of the M groups is one or more of the following: users, locations, or time corresponding to the support samples.

18. The apparatus according to claim 16, wherein at least one first support sample comprised in the first sample subset comes from a same group of the M groups, and at least one first query sample comprised in the first sample subset comes from a same group of the M groups.

19. The apparatus according to any one of claims 11 to 14, wherein the first neural network is any one of the following neural networks: a fully-connected neural network, a convolutional neural network, or a residual neural network.

20. A sample processing apparatus, wherein the apparatus comprises:

an obtaining module, configured to obtain a third support sample and a third query sample; and
an input module, configured to input the third support sample and the third query sample into a first neural network, to obtain a third prediction result that corresponds to the third query sample and that is output by the first neural network, wherein the third prediction result is generated based on a similarity between feature information of the third support sample and feature information of the third query sample, wherein
the first neural network is obtained through training based on a first loss function and a second loss function, the first loss function indicates a similarity between the prediction result output by the first neural network and a correct result, the second loss function indicates a similarity between the prediction result output by the first neural network and a second prediction result corresponding to the third query sample, or, the second loss function indicates a similarity between the second prediction result and the correct result, wherein the second prediction result is obtained based on second feature information corresponding to M groups of support samples, correct results corresponding to the M groups of support samples, and the feature information of the third query sample, the third support sample can belong to a third group of support samples, the third query sample can belong to a third group of query samples, and the third group is one of the M groups.

21. A training device, comprising a processor, wherein the processor is coupled to a memory, and the memory stores program instructions; and when the program instructions stored in the memory are executed by the processor, the method according to any one of claims 1 to 9 is implemented.

22. An execution device, comprising a processor, wherein the processor is coupled to a memory, and the memory stores program instructions; and when the program instructions stored in the memory are executed by the processor, the method according to claim 10 is implemented.

23. A computer-readable storage medium, comprising a program, wherein when the program is run on a computer, the computer is enabled to perform the method according to any one of claims 1 to 9, or the computer is enabled to perform the method according to claim 10.

24. A circuit system, wherein the circuit system comprises a processing circuit, and the processing circuit is configured to perform the method according to any one of claims 1 to 9, or the processing circuit is configured to perform the method according to claim 10.

Intelligent information chain

Intelligent products and industry application

Translation/Text analysis/... | Speech/Vision/Image/...

Data

Data processing: | Data training/Machine learning/Deep learning | Searching/ Reasoning/ Decision-making | ...

Infrastructure | Sensor | Smart chip | Basic platform | ...

IT value chain

FIG. 1

FIG. 2

A training device creates a feature information base | 301

The training device obtains a first sample subset from a sample set, where the first sample subset includes a first support sample and a first query sample | 302

The training device inputs the first sample subset into a first neural network, to obtain first feature information of the first query sample and feature information of the first support sample that are generated by the first neural network, and obtain a first prediction result that corresponds to the first query sample and that is output by the first neural network, where the first neural network is used to classify samples | 303

The training device adds the feature information of the first support sample to a first queue in the feature information base | 304

The training device obtains second feature information corresponding to M groups of support samples and first labeling results corresponding to the M groups of support samples based on the feature information base | 305

The training device generates a second prediction result corresponding to the first query sample based on the second feature information corresponding to the M groups of support samples, the first labeling results corresponding to the M groups of support samples, and the first feature information of the first query sample | 306

The training device performs iterative training on the first neural network based on a first loss function and a second loss function, until a preset condition is met, where the first loss function indicates a similarity between the first prediction result and a second labeling result, the second loss function indicates a similarity between the first prediction result and the second prediction result, or, the second loss function indicates a similarity between the second prediction result and the second labeling result | 307

FIG. 3

First support images | First query images

Dogs | Wolves | Tables | Sofas | Dogs | Sofas

First sample subset

FIG. 4

First support images | First query images

Disliked images | liked images | Disliked images | Liked images | Liked images

First sample subset (corresponding to a user A)

FIG. 5

First sample subset

First support images

Dogs | Wolves | Tables | Sofas

First query images

Dogs | Sofas

First neural network

▲ Dogs
🐾 Wolves

Tables 🔥

Sofas 🔥

Feature information of the first query images

First prediction result

FIG. 6

FIG. 7

First sample subset

First support images

Dogs    Wolves    Tables    Sofas

First query images

Dogs    Sofas

Feature extraction network

First classification network

Second classification network

M pieces of second feature information and M first labeling results

Second labeling result

First prediction result

Second prediction result

Function value of a first loss function

Function value of a second loss function

FIG. 8

EP 4 167 130 A1

| A training device creates a feature information base | 901 |

| The training device obtains a first sample subset from a sample set, where the first sample subset includes a first support sample and a first query sample | 902 |

| The training device inputs the first sample subset into a first neural network, to obtain first feature information of the first query sample and feature information of the first support sample that are generated by the first neural network, and obtain a first prediction result that corresponds to the first query sample and that is output by the first neural network, where the first neural network is used to perform regression on samples | 903 |

| The training device adds the feature information of the first support sample and a labeling result of the first support sample to a first queue in the feature information base | 904 |

| The training device obtains second feature information corresponding to M groups of support samples and first labeling results corresponding to the M groups of support samples based on the feature information base | 905 |

| The training device generates a second prediction result corresponding to the first query sample based on the second feature information corresponding to the M groups of support samples, the first labeling results corresponding to the M groups of support samples, and the first feature information of the first query sample | 906 |

| The training device performs iterative training on the first neural network based on a first loss function and a second loss function, until a preset condition is met, where the first loss function indicates a similarity between the first prediction result and a second labeling result, the second loss function indicates a similarity between the first prediction result and the second prediction result, or, the second loss function indicates a similarity between the second prediction result and the second labeling result | 907 |

FIG. 9

An execution device obtains a third support sample and a third query sample                     1001

The execution device inputs the third support sample and the third query sample into a first neural network, to obtain a third prediction result that corresponds to the third query sample and that is output by the first neural network, where the third prediction result is generated based on a similarity between feature information of the third support sample and feature information of the third query sample, and the first neural network is obtained through training based on a first loss function and a second loss function                     1002

FIG. 10

1100

Apparatus for training a neural network

| Obtaining module 1101 | Input module 1102 | Generation module 1103 | Training module 1104 |

FIG. 11

1100

Apparatus for training a neural network

| Obtaining module 1101 | Input module 1102 | Generation module 1103 | Adding module 1105 | Training module 1104 |

FIG. 12

1300

Sample processing apparatus

Obtaining module 1301 — Input module 1302

FIG. 13

1400

Training device

1422 — Central processing unit    Power supply — 1426

Operating system — 1441

Data — 1444

Application — 1442

Storage medium — 1430

Memory — 1432

Wired or wireless network interface — 1450

Input/Output interface — 1458

FIG. 14

1500

Execution device

Antenna

Antenna

| Receiver 1501 | Transmitter 1502 |
|---|---|

Processor 1503

| Memory 1504 | Application processor 15031 | Communications processor 15032 |
|---|---|---|

FIG. 15

EP 4 167 130 A1

FIG. 16

## INTERNATIONAL SEARCH REPORT

| International application No. |
|---|
| **PCT/CN2021/105215** |

| A. | CLASSIFICATION OF SUBJECT MATTER |
|---|---|

G06K 9/62(2006.01)i

According to International Patent Classification (IPC) or to both national classification and IPC

| B. | FIELDS SEARCHED |
|---|---|

Minimum documentation searched (classification system followed by classification symbols)

G06K

Documentation searched other than minimum documentation to the extent that such documents are included in the fields searched

Electronic data base consulted during the international search (name of data base and, where practicable, search terms used)

CNPAT, WPI, EPODOC, IEEE, ISI, CNKI: 小样本, 元学习, 学习, 神经网络, 训练, 预测, 损失函数, 标注, 特征维度, 支持样本, few shot, sample, meta learning, neural network, training, predict, loss

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 111950596 A (HUAWEI TECHNOLOGIES CO., LTD.) 17 November 2020 (2020-11-17) claims 1-24, description paragraphs [0070]-[0233] | 1-24 |
| A | CN 110288049 A (BEIJING BYTEDANCE NETWORK TECHNOLOGY CO., LTD.) 27 September 2019 (2019-09-27) claims 1-10 | 1-24 |
| A | CN 111401406 A (HUAWEI TECHNOLOGIES CO., LTD.) 10 July 2020 (2020-07-10) entire document | 1-24 |
| A | CN 109508655 A (BEIJING UNIVERSITY OF CHEMICAL TECHNOLOGY) 22 March 2019 (2019-03-22) entire document | 1-24 |
| A | CN 110909815 A (SHENZHEN SENSETIME TECHNOLOGY CO., LTD.) 24 March 2020 (2020-03-24) entire document | 1-24 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **24 September 2021** | **11 October 2021** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088** **China** | |
| Facsimile No. **(86-10)62019451** | Telephone No. |

Form PCT/ISA/210 (second sheet) (January 2015)

## INTERNATIONAL SEARCH REPORT

| International application No. |
| --- |
| **PCT/CN2021/105215** |

| C. | DOCUMENTS CONSIDERED TO BE RELEVANT | |
| --- | --- | --- |
| Category* | Citation of document, with indication, where appropriate, of the relevant passages | Relevant to claim No. |
| A | 叶翰嘉 等 (YE, Hanjia et al.). "基于模型分解的小样本学习 (Few-Shot Learning via Model Composition)" <br> 中国科学: 信息科学 (Science in China, Information Sciences), <br> Vol. 50, No. 5, 26 April 2020 (2020-04-26), <br> pp. 662-674 | 1-24 |
| A | US 2017330054 A1 (BAIDU ONLINE NETWORK TECHNOLOGY BEIJING CO., LTD.) 16 November 2017 (2017-11-16) <br> entire document | 1-24 |

**INTERNATIONAL SEARCH REPORT**
Information on patent family members

International application No.

**PCT/CN2021/105215**

| Patent document cited in search report | | | Publication date (day/month/year) | Patent family member(s) | | | Publication date (day/month/year) |
|---|---|---|---|---|---|---|---|
| CN | 111950596 | A | 17 November 2020 | None | | | |
| CN | 110288049 | A | 27 September 2019 | None | | | |
| CN | 111401406 | A | 10 July 2020 | None | | | |
| CN | 109508655 | A | 22 March 2019 | None | | | |
| CN | 110909815 | A | 24 March 2020 | None | | | |
| US | 2017330054 | A1 | 16 November 2017 | US | 10354170 | B2 | 16 July 2019 |
| | | | | CN | 106021364 | A | 12 October 2016 |
| | | | | CN | 106021364 | B | 12 December 2017 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202010680648